(19) Europäisches Patentamt
European Patent Office
Office européen des brevets

(11) EP 2 657 285 B1

(12) EUROPEAN PATENT SPECIFICATION

(45) Date of publication and mention of the grant of the patent:
**22.07.2015 Bulletin 2015/30**

(51) Int Cl.:
***C08L 23/12*** *(2006.01)*

(21) Application number: **12165430.5**

(22) Date of filing: **25.04.2012**

(54) **moulded polypropylene with high content of beta form**

Polypropylen mit hohem Betaform-Gehalt

Polypropylène moulé à teneur élevée en forme bêta

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2013 Bulletin 2013/44**

(73) Proprietor: **Borealis AG**
**1220 Vienna (AT)**

(72) Inventors:
- **Tranchida, Davide**
  **4020 Linz (AT)**
- **Kandioller, Gottfried**
  **4020 Linz (AT)**
- **Resconi, Luigi**
  **44100 Ferrara (IT)**

(74) Representative: **Maiwald Patentanwalts GmbH**
**Elisenhof**
**Elisenstrasse 3**
**80335 München (DE)**

(56) References cited:
**WO-A1-2007/116034** **WO-A1-2010/057841**
**WO-A2-03/094832**

- **BUSSE ET AL.: J. MACROMOLECULES, vol. 33, 2000, pages 8775-8780, XP002681644,**
- **KRACHE ET AL.: MACROMOLECUES, vol. 40, 2007, pages 6871-6878, XP002681645,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 657 285 B1

## Description

The present invention is directed to a non-nucleated (compression) moulded polypropylene with high content of beta form. Particularly, present invention is directed to a non-nucleated metallocene type (compression) moulded isotactic polypropylene with high content of beta form.

Beta-form formation in melt crystallized, metallocene-based isotactic polypropylene (MC-iPP) has not been reported in the literature so far. Only when nucleating agents are added, beta-form formation can be observed for these polymers. Busse et al (J. Macromolecules 2000, 33, 8775-8780) describe the formation of beta-phase in MC-iPP (defect concentration as determined by $^{13}$C-NMR: 1.1 %) only upon the addition of the nucleating agent N,N-dicyclohexyl-2,6-naphthalene dicarboxamide (0.3 wt.-%). In the absence of the nucleating agent, no beta-phase was observed. Krache et al (Macromolecues 2007, 40, 6871-6878) describe the competition between alpha-, beta- and gamma-polymorphs in beta-nucleated MC-iPP. They found that the addition of a 1 wt% of a typical beta-nucleating agent was not enough to develop any appreciable amount of beta-modification whereas in comparison, the same amount of nucleating agent added to a Ziegler-Natta iPP (ZN-iPP) leads to almost 100% of beta-form.

WO-A-2010/57841 discloses propylene copolymer with high beta content polymorphs by addition of beta nucleating agent

However, ZN catalysts have the disadvantage that polar residues like chlorine, aluminium, titanium, magnesium or silicon originating from the used Ziegler-Natta catalyst, are found in the resulting polymer. Such residues can have negative impact on the desired products, for instance moulded products. In contrast thereto, with a metallocene catalyst a polypropylene is obtainable being essentially free of undesired residues.

It is therefore the object of the present invention to provide a moulded polypropylene product avoiding the disadvantages of residue content of ZN catalysts, but still having considerable beta-phase content. Moreover, it is an object of the present invention to avoid the use of nucleating agents.

The present invention is based on the finding that a polypropylene with β-phrase is obtained by moulding or compression moulding of a highly isotactic propylene homopolymer.

Thus in a first aspect the present invention is directed to a moulded polypropylene homopolymer product, comprising at least 90 wt% of a polypropylene homopolymer having

(a) a pentad isotacticity (mmmm) of equal or more than 98.0 mol.-% as determined by $^{13}$C NMR spectroscopy, and
(b) a melting temperature ($T_m$) measured by differential scanning calorimetry (DSC) of at least 140.0 °C, and
(c) a beta-phase content ranging from 10 to 90%, wherein said β-phase is measured via wide angle x-ray scattering (WAXS).

wherein that moulded polypropylene product is free of beta nucleating agent.

The moulded polypropylene homopolymer product according to the invention comprises at least 90 wt% of a polypropylene homopolymer as described above. In further embodiments of the invention, the moulded polypropylene homopolymer product comprises at least 95 wt%, at least 97 wt% or at least 99 wt% of a polypropylene homopolymer as described herein. In a further embodiment of the invention, the moulded polypropylene homopolymer product comprises 100 wt%, at the most 99.9 wt%, at the most 99.7 wt%, at the most 99.5 wt% or 99.2 wt% of a polypropylene homopolymer as described herein. It is to be understood that each combination of lower and upper limits as given above is regarded as disclosed, for example that the polypropylene homopolymer product according to the invention comprises a polypropylene homopolymer as described herein in the range of 90 wt% to 100 wt%, or for example in the range of 90 wt% to 99,7 wt%. In one embodiment the polypropylene homopolymer is the only polymer within the moulded polypropylene homopolymer product. In still another preferred embodiment the moulded polypropylene homopolymer product consists of the polypropylene homopolymer as described herein.

There exists a crucial difference in the chain-microstructure between polypropylenes produced by a metallocene catalyst and a Ziegler-Natta catalyst. The chain regularity of metallocene based polypropylene is reduced by stereo and regio-defects, whereas the chain regularity of Ziegler-Natta based polypropylenes is only reduced by stereo defects. It is important to note that present polypropylene homopolymer is a metallocene-type isotactic propylene homopolymer.

The expression homopolymer used in the instant invention relates to a polypropylene that consists substantially, i.e. of at least 99.5 wt.-%, more preferably of at least 99.8 wt.-%, of propylene units. In a preferred embodiment only propylene units in the propylene homopolymer are detectable. The comonomer content can be determined with $^{13}$C NMR spectroscopy, as described below in the examples.

It is further important to note that the moulded propylene homopolymer product according to present invention is free of nucleating agents.

The propylene homopolymer can be defined by its stereoregularity, i.e. by its pentad isotacticity. Thus it is preferred that the propylene homopolymer has a rather high pentad isotacticity (mmmm), i.e. equal or more than 98.0 mol.-%, more preferably equal or more than 98.5 mol.-%, still more preferably equal or more than 99.0 mol.-%, yet more

preferably in the range of equal or more than 98.5 to below 100.0 mol.-%, like equal or more than 98.9 to equal or below 99.8 mol.-%.

On the other hand the content of mrrm stereo sequences shall preferably be rather low. Accordingly it is preferred that the mrrm stereo-defects of the propylene homopolymer are preferably below 1.0 mol.-%, more preferably equal or below 0.8 mol.-%, yet more preferably equal or below 0.5 mol.-%, still more preferably in the range of equal or more than 0.0 to equal or below 1.0 mol.-%, yet more preferably in the range of equal or more than 0.0 to equal or below 0.5 mol.-%.

In one embodiment the isotactic propylene homopolymer, like the metallocene-based isotactic propylene homopolymer, contains a detectable amount of region-defects, i.e. 2,1 erythro regio-defects. Accordingly the isotactic propylene homopolymer, like the metallocene-based isotactic propylene homopolymer, has preferably 2,1 erythro regio-defects of equal or more than 0.0 to equal or below 1.2 mol.-%, like equal or more than 0.1 to equal or below 1.2 mol.-% as determined by $^{13}C$ NMR spectroscopy. Preferably the isotactic propylene homopolymer, like the metallocene-based isotactic propylene homopolymer, is featured by a rather low concentration of regio-errors, like <2,1> erythro regio-defects, compared to known metallocene based polypropylenes. Accordingly it is preferred that the propylene homopolymer of the instant, like the metallocene-based isotactic propylene homopolymer invention, has <2,1> erythro regio-defects of equal or more than 0.0 to equal or below 1.2 mol.-%, like equal or more than 0.1 to equal or below 1.2 mol.-%, more preferably of equal or more than 0.0 to equal or below 0.9 mol.-%, like of equal or more than 0.1 to equal or below 0.9 mol.-%, still more preferably of equal or more than 0.00 to equal or below 0.80 mol.-%, like of equal or more than 0.10 to equal or below 0.80 mol.-%, yet more preferably of equal or more than 0.00 to equal or below 0.70 mol.-%, like of equal or more than 0.10 to equal or below 0.70 mol.-%, determined by $^{13}C$-spectroscopy.

Further the propylene homopolymer can be defined by the melting temperature ($T_m$). Thus it is appreciated that the propylene homopolymer has a melting temperature ($T_m$) measured by differential scanning calorimetry (DSC) of at least 140.0 °C, more preferably of at least 147 °C. The upper limit of the melting temperature ($T_m$) may be given as 175°C, 173°C, 171°C or 170°C. Thus it is in particular appreciated that the melting temperature ($T_m$) measured by differential scanning calorimetry (DSC) of the propylene homopolymer is in the range of 140 to 175 °C, more preferably in the range of 147 to 175 °C, yet more preferably in the range of 150 to 175 °C, like in the range of 153 to 175 °C.

As apparent from the word "propylene homopolymer" the present invention does not define a composition of different polymers. Accordingly the propylene homopolymer may comprise further additives but no other polymer components than the homopolymer. It is especially preferred that the propylene homopolymer is free of nucleating agents, in particular free of β-nucleating agents and/or α-nucleating agents.

The propylene homopolymer in the (compression) moulded propylene homopolymer product according to the invention contains surprisingly a considerable amount of beta-phase (β-phase, β-modification or β-form) of crystalline polypropylene. Accordingly it is appreciated that the propylene homopolymer in the (compression) moulded product has a beta-phase content of equal or more than 10 %, equal or more than 12 %, wherein said β-phase has been measured on compression moulded specimens, preferably on compression moulded specimens prepared as defined in the example section, via wide angle x-ray scattering (WAXS). The upper limit of beta-phase content is preferably equal or less than 90 %, equal or less than 80 %, equal or less than 70 %. It is to be understood that each combination of the given lower and upper limits are to be regarded as disclosed, for instance a range of beta-phase from 12 to 80 % or 12 to 70 %.

Furthermore, it is preferred that the propylene homopolymer of the present invention has a melt flow rate (MFR) given in a specific range. Accordingly, it is preferred that in the present invention the propylene homopolymer has an $MFR_2$ (230 °C) of not more than 10.0 g/10min, more preferably of equal or below 7.0 g/10min, still more preferably below 6.5 g/10min. As a lower limit, an $MFR_2$ (230 °C) value of 0.05 g/10 min can be given. It is to be understood that every combination of upper with the lower limits is regarded herewith as disclosed.

The propylene homopolymer of the instant invention is preferably featured by rather low xylene cold soluble (XCS) content, i.e. by a xylene cold soluble (XCS) content of equal or below 1.5 wt.-%, more preferably of equal or below 1.0 wt.-%, yet more preferably equal or below 0.8 wt.-%, like equal or below 0.5 wt.-%. Thus it is in particular appreciated that the propylene homopolymer of the instant invention has a xylene cold soluble (XCS) content in the range of 0.0 to equal or below 1.5 wt.-%, more preferably in the range of 0.0 to equal or below 1.0 wt.-%, yet more preferably in the range of 0.0 to equal or below 0.8 wt.-%, like in the range of 0.0 to equal or below 0.5 wt.-%.

In a preferred embodiment the (compression) moulded propylene homopolymer product has the same microstructure properties, i.e. mmmm pentad isotacticity and mrrm stereo defect, melting temperature, melt flow rate and xylene cold soluble (XCS) content, and beta-phase as the propylene homopolymer.

The moulded propylene homopolymer product of present invention is preferably a (compression) moulded propylene homopolymer. It has surprisingly been found that the beta-phase forms upon moulding, in particular upon compression moulding.

The terms "moulding" or "moulded" according to this invention is broadly understood and thus cover articles obtained by any kind of forming processes via moulding. The terms "moulding" or "moulded" in particular covers for example injection moulded, compression moulded or extruded articles. Combinations of these forming processes like

extrusion blow moulding, injection blow moulding, injection stretch blow moulding are covered as well. In the compression moulding process the moulding material is placed in a mould cavity and heated up to a temperature above the melting temperature (Tm). The mould cavity is closed and a top force pressure of more than the atmospheric pressure is applied. Afterwards the material is cooled down, optionally the pressure is holded during the cooling phase. In the injection moulded process the moulding material is fed into a heated barrel (where it is heated up and moulded) and forced into a mould cavity where it cools down under pressure. In the extrusion process the material is heated up and moulded in the extruder and pushed through a die. Reference with regard to the definitions of extrusion and moulding is made to the "Polypropylene Handbook", Nello Pasquini, 2nd Edition, Hanser.

According to the instant invention a moulded propylene homopolymer (product) has been molten either with or without pressure. In turn a compression moulded propylene homopolymer (product) has been molten under pressure, i.e. a pressure being higher than the atmospheric pressure.

The moulded propylene homopolymer product, in particular the compression moulded propylene homopolymer product of present invention is preferably of bigger size than 30x5x0.6 mm. In particular, the size of 30x5x0.6 mm shall be excluded from present invention.

The moulded polymer product according to the present invention may be prepared by a process comprising the following steps:

(a) heating an isotactic propylene homopolymer powder to a temperature equal or above the melting temperature ($T_m$) measured by differential scanning calorimetry (DSC) of said powder, and holding the temperature for at least 1 minute; and

(c) cooling the molded propylene homopolymer down to ambient temperature.

The compression molded product according to the present invention may be prepared by a process comprising the following steps:

(a) heating a propylene homopolymer powder to a temperature equal or above the melting temperature ($T_m$) measured by differential scanning calorimetry (DSC) of said powder, and holding the temperature for at least 1 minute; applying simultaneously pressure in the range of 1 to 140 MPa

(b) optionally holding the pressure of step (a) without further heating, and

(c) cooling the compression molded propylene homopolymer down to ambient temperature.

Thereby, the term "polymer powder" or "powder" are equally applied in the instant invention and define preferably the polymer directly derived from polymerization, i.e. the "polymer as is", without being further processed.

Throughout the present invention a preferred propylene homopolymer (powder) is a metallocene-based propylene homopolymer (powder). Thus in a preferred embodiment throughout the present invention the term "propylene homopolymer (powder)" can be replaced by the term "metallocene-based propylene homopolymer (powder)".

The term "equal or above the melting temperature ($T_m$) measured by differential scanning calorimetry (DSC) of the propylene homopolymer" in step (a) means a temperature at least as high as the temperature $T_m$ as measured by differential scanning calorimetry (DSC) of the propylene homopolymer to be processed, preferably it means a temperature range from $T_m$ to 80°C above the temperature $T_m$, more preferably it means a temperature range from $T_m$ to 65°C above the temperature $T_m$.

Alternatively, the term "equal or above the melting temperature ($T_m$) measured by differential scanning calorimetry (DSC) of the propylene homopolymer" can be given as temperature range from $T_m$ to 240°C, more preferably from $T_m$ to 230°C, still more preferably from $T_m$ to 220°C, yet more preferably from $T_m$ to 215°C.

Alternatively, the term "equal or above the melting temperature ($T_m$) measured by differential scanning calorimetry (DSC) of the propylene homopolymer" can be given in absolute terms, i.e. a range from 165°C to 240°C, preferably from 170°C to 230°C, more preferably from 180°C to 220°C, like from 185°C to 215°C.

In a preferred embodiment the propylene homopolymer powder is not only exposed to a certain temperature but also to a certain pressure. Accordingly it is preferred that throughout step (a) a specific pressure is applied. Thus in some embodiments, the lower pressure given for step (a) may be 1 MPa, 3 MPa, 5 MPa, 8 MPa, or 10 MPa. The upper pressure may be given as 140 MPa, 120 MPa. 110 MPa, 100 MPa, 90 MPa, or 80 MPa. It is to be understood that the upper and lower limits as given herein may be combined with each other. Moreover, it is preferred that during pressing, the pressure is kept constant. In one preferred embodiment the pressure is between 2 to 100 MPa, more preferably between 3 to 80 MPa, like between 5 to 50 MPa.

The temperature and optionally the pressure applied in step (a) shall be hold for a certain time. Preferably, the temperature and optionally the pressure should be hold for at least 1 minute, as for example 1 to 15 minutes. In some embodiments, the lower limit of the time is 1 min, 2 min, 3 min, or 4 min. In some embodiments, the upper limit of the time is 15 min, 13 min, 10 min, 7 min.

Accordingly in step (a), the temperature and optionally the pressure is preferably upheld for at least 1 minute, as for example 1 to 15 minutes. In some embodiments, the lower limit of the time is 1 min, 2 min, 3 min, or 4 min. In some embodiments, the upper limit of the time is 15 min, 13 min, 10 min, 7 min. It is to be understood that each lower limit may be combined with any one of the upper limits. Thus in one preferred embodiment the pressure is preferably upheld for 2 to 7 minutes.

In the optional step (b) pressure is applied on the propylene homopolymer preferably without further heating. Preferably the pressure values and ranges, respectively, described for step (a) are equally applicable for step (b). More preferably in step (b) the pressure of step (a) is kept without further heating. More preferably the pressure of step (b) differs not more than 1 MPa, preferably not more than 0.5 MPa, like not more than 0.05 MPa from the pressure applied in step (a). In one specific embodiment the pressure in step (a) and (b) are identical, i.e. no difference in pressure is detectable.

In one embodiment, the pressure in step (b) is upheld for 1 to 15 minutes. In some embodiments, the lower limit of the time is 1 min, 2 min, 3 min, or 4 min. In some embodiments, the upper limit of the time is 15 min, 13 min, 10 min, 7 min. In one embodiment, the product of step (a) is transferred for step (b) to another press held at ambient temperature, thereby applying the pressure of step (a) and holding the pressure upheld for 1 to 15 minutes, like 2 to 10 min. Accordingly in some embodiments, the lower limit of the time is 1 min, 2 min, 3 min, or 4 min. In some embodiments, the upper limit of the time is 15 min, 13 min, 10 min, 7 min.

It is to be understood that each lower limit may be combined with any one of the upper limits. Thus in one preferred embodiment the pressure in step (b) is preferably upheld for 2 to 7 minutes.

The term "ambient temperature" in the meaning of present invention is the ambient air temperature, i.e. between 15 and 30°C.

In step (c), the product obtained in step (a) or (b) is allowed to cool down to ambient temperature.

In step (c) it is not mandatory to choose a specific cooling rate. However, specific cooling rates may be applied, such as a cooling rate selected in a range from 100 to 0.1 °C/min, more preferably in the range of 50 to 1 °C/min.

As processing of polymers involves the re-melting and crystallization of an already moulded propylene homopolymer product, it is important that melting and cooling of the product obtained in the process above does not impair the beta-phase content in the moulded propylene homopolymer product treated by further melting/crystallization. In order to secure a beta-phase content in a further moulded propylene homopolymer product, the following conditions have to be met.

In a possible step (d), the obtained product of step (c) is subjected to a melting process. Thereby, the (compression) moulded propylene homopolymer product is heated to a temperature above the the melting temperature ($T_m$) measured by differential scanning calorimetry (DSC) of the propylene homopolymer. It is preferred that the temperature is not too high so that the thermal history of the propylene is not completely destroyed. Therefore, it is preferred that the temperature applied is not higher than 300°C, preferably not higher than 250°C, more preferably not higher than 230°C. Accordingly it is appreciated that the temperature is in the range of 180 to 300 °C, more preferably in the range of 190 to 250 °C, like in the range of 195 to 230 °C.

Particularly, the term "equal or above the melting temperature ($T_m$) measured by differential scanning calorimetry (DSC) of the propylene homopolymer" in step (d) means a temperature as least as high as the temperature $T_m$ as measured by differential scanning calorimetry (DSC), preferably it means a temperature range from $T_m$ to 70°C above the temperature $T_m$, more preferably it means a temperature range from $T_m$ to 60°C above the temperature $T_m$.

Also, it is preferred that the temperature is not applied too long. Preferred time limits are 1 to 15 min. The lower limit of the application time may be selected from 1 min, 2 min, 3 min, 5 min, or 7 min. The upper limit of the application time may be selected from 15 min, 13 min, or 10 min. It is to be understood that each lower limit given can be combined with each upper limit given.

An aspect of the present invention is the chain-microstructure of the propylene homopolymer. The propylene homopolymer of the present invention is produced by a specific solid catalyst system as defined in detail below. This specific solid catalyst system - although it is based on a metallocene catalyst - enables a skilled person to produce a propylene homopolymer with a rather low concentration of stereo and regio-defects, respectively.

Accordingly, in the following, preferred metallocenes are described.

Hence, the propylene homopolymer of this invention is preferably produced in the presence of a single-site catalyst, in particular in the presence of a metallocene catalyst, like a metallocene catalyst of formula (I).

Accordingly, the moulded propylene homopolymer product is preferably produced by a process comprising the steps of

(a) polymerizing propylene in the presence of a solid catalyst system, said solid catalyst system comprises

(i) a complex of formula (I)

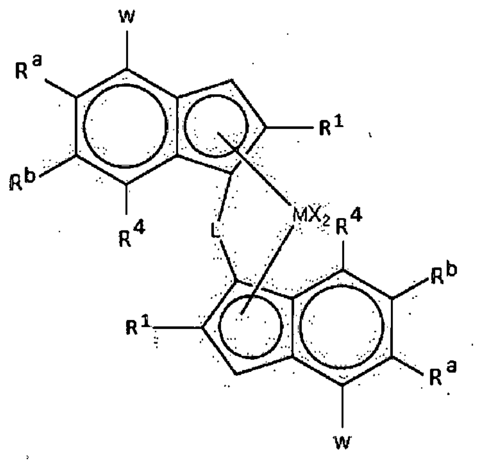

(I)

wherein

M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
each $R^1$ is independently a $C_1$-$C_{20}$ hydrocarbyl radical optionally containing one or more heteroatoms from groups 14-16, or is a $C_4$-$C_{20}$ hydrocarbyl radical branched at the β-atom to the cyclopentadienyl ring, optionally containing one or more heteroatoms belonging to groups 14-16, or is a $C_3$-$C_{20}$ hydrocarbyl radical branched at the β-atom to the cyclopentadienyl ring where the β-atom is an Si-atom;
each $R^a$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by n groups $R^{18}$, n being from 0 to 3; each $R^{18}$ is same or different and may be a $C_1$-$C_{20}$ hydrocarbyl group, or a $C_1$-$C_{20}$ hydrocarbyl radical optionally containing one or more heteroatoms belonging to groups 14-16;
each $R^4$ is independently an aliphatic $C_{1\text{-}20}$ hydrocarbyl group optionally containing one or more heteroatoms from groups 14-16, or is a hydrogen atom;
each W group is independently an aryl or heteroaryl group having up to 20 carbon atoms optionally substituted by one or more groups $R^5$;
each $R^5$ is the same or different and is a $C_1$-$C_{20}$ hydrocarbyl group optionally containing one or more heteroatoms belonging to groups 14-16; or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s), or two adjacent $R^5$ groups taken together can form a further mono or multicyclic ring condensed to W optionally substituted by one or two groups $R^5$;

and
(ii) optionally a cocatalyst comprising a compound of a group 13 metal, e.g. boron.

The moulded propylene homopolymer product according to present invention is formed by subjecting the propylene homopolymer as described herein to a moulding step.
Preferably, such moulding step is a compression moulding step.
The term $C_1$-$C_{20}$ hydrocarbyl group therefore includes $C_1$-$C_{20}$ alkyl, $C_2$-$C_2$ alkenyl, $C_2$-$C_{20}$ alkynyl, $C_3$-$C_{20}$ cycloalkyl, $C_3$-$C_{20}$ cycloalkenyl, $C_6$-$C_{20}$ aryl groups, $C_7$-$C_{20}$ alkylaryl groups or $C_7$-$C_{20}$ arylalkyl groups or of course mixtures of these groups such as cycloalkyl substituted by alkyl.
Unless otherwise stated, preferred $C_1$-$C_{20}$ hydrocarbyl groups are $C_1$-$C_{20}$ alkyl, $C_4$-$C_{20}$ cycloalkyl, $C_5$-$C_{20}$ cycloalkyl-alkyl groups, $C_7$-$C_{20}$ alkylaryl groups, $C_7$-$C_{20}$ arylalkyl groups or $C_6$-$C_{20}$ aryl groups, especially $C_1$-$C_{10}$ alkyl groups, $C_6$-$C_{10}$ aryl groups, or $C_7$-$C_{12}$ arylalkyl groups, e.g. $C_1$-$C_8$ alkyl groups. Most especially preferred hydrocarbyl

groups are methyl, ethyl, propyl, isopropyl, tertbutyl, isobutyl, $C_5$-$C_6$ cycloalkyl, cyclohexylmethyl, phenyl or benzyl.

The term halo includes fluoro, chloro, bromo and iodo groups, especially chloro groups, when relating to the complex definition.

The term heterocyclic group means a preferably monocyclic non aromatic ring structure comprising at least one heteroatom, e.g. piperidinyl or piperazinyl.

The term heteroaryl means a preferably monocyclic aromatic ring structure comprising at least one heteroatom. Preferred heteroaryl groups have 1 to 4 heteroatoms selected from O, S and N. Preferred heteroaryl groups include furanyl, thiophenyl, oxazole, thiazole, isothiazole, isooxazole, triazole and pyridyl.

Any group including "one or more heteroatoms belonging to groups 14-16" preferably means O, S or N. N groups may present as -NH- or -NR"- where R" is $C_1$-$C_{10}$ alkyl. There may, for example, be 1 to 4 heteroatoms.

The oxidation state of the metal ion is governed primarily by the nature of the metal ion in question and the stability of the individual oxidation states of each metal ion.

It will be appreciated that in the complexes of the invention, the metal ion M is coordinated by ligands X so as to satisfy the valency of the metal ion and to fill its available coordination sites. The nature of these σ-ligands can vary greatly.

A preferred subgroup of the metallocenes belong to the group of formula (I),

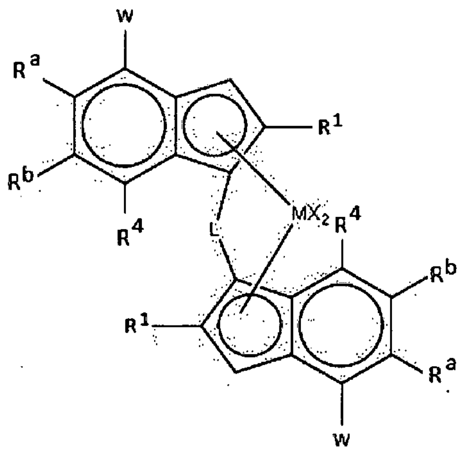

wherein

M is zirconium or hafnium;
each X is a sigma ligand;
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
each $R^1$ is independently a $C_1$-$C_{20}$ hydrocarbyl radical optionally containing one or more heteroatoms from groups 14-16;
each $R^a$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by a group $R^{18}$;
each $R^{18}$ is a $C_1$-$C_{20}$ hydrocarbyl group;
each $R^4$ is independently hydrogen or an aliphatic $C_{1-20}$ hydrocarbyl group optionally containing one or more heteroatoms from groups 14-16;
each W group is independently an aryl or heteroaryl group having up to 20 carbon atoms optionally substituted by one or more groups $R^5$;
each $R^5$ is a $C_1$-$C_{20}$ hydrocarbyl group, or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s);
and (ii) a cocatalyst comprising a compound of a group 13 metal, e.g. boron.

Examples for the catalysts of formula I are:

MC1: *rac*-dimethylsilanediylbis[2-methyl-4-(3,5-di-tert-butylphenyl)-7-methoxyindenyl] hafnium dichloride
MC2: *rac*-dimethylsilanediylbis(2-*iso*-butyl-4-phenyl-5-methoxy-6-tert-butylinden-1-yl) zirconium dichloride
MC3: *rac*-dimethylsilanediylbis[2-methyl-4-(3,5-di-tert-butylphenyl)-7-methoxyindenyl] zirconium dichloride

The catalyst of the invention can be used in non-supported form or in supported form. The catalyst of the invention may be used as a homogeneous catalyst or heterogeneous catalyst, the latter being preferred.

The catalyst of the invention in solid form, preferably in solid particulate form can be either supported on an external carrier material, like silica or alumina, or, in a particularly preferred embodiment, is free from an external carrier, however still being in solid form. Ideally, the solid catalyst is obtainable by a process in which

(a) a liquid/liquid emulsion system is formed, said liquid/liquid emulsion system comprising a solution of the catalyst components (i) and (ii) dispersed in a solvent so as to form dispersed droplets; and
(b) solid particles are formed by solidifying said dispersed droplets.

By free from an external carrier is meant that the catalyst does not contain an external support, such as an inorganic support, for example, silica or alumina, or an organic polymeric support material.

The two multicyclic ligands making up the complex of formula (I) are preferably identical and hence the complex of formula (I) may be symmetrical. The complexes of the invention may be in their meso or racemic forms (or a mixture thereof). Preferably, the racemic (rac) form is used.

The instant solid catalyst system comprises (I) a complex in which the metal ion is coordinated by a ligand as defined herein; and normally (ii) an aluminium alkyl compound (or other appropriate cocatalyst), or the reaction product thereof. Thus the cocatalyst is preferably an alumoxane, like MAO or an alumoxane other than MAO.

Alternatively, however, the catalysts of the invention may be used with other cocatalysts, e.g. boron compounds such as $B(C_6F_5)_3$, $C_6H_5N(CH_3)_2H{:}B(C_6F_5)_4$, $(C_6H_5)_3C{:}B(C_6F_5)_4$ or $Ni(CN)_4[B(C_6F_5)_3]_4^{2-}$.

The use of aluminoxanes, especially MAO, is highly preferred.

Suitable amounts of cocatalyst will be well known to the skilled man. Typically Al to M molar ratios are from 1:1 to 1000:1 mol/mol. Preferably when an aluminium alkyl is used as a coctalyst, the molar ratio of the aluminium in the activator to the transition metal in the complex is from 1 to 500 mol/mol, preferably from 10 to 400 mol/mol and in particular from 50 to 400 mol/mol.

The catalyst system used is in solid particulate form, but unsupported, i.e. being free of support material likes silica, alumina or zirconia or a mixed oxide such as silica-alumina, in particular silica, alumina or silica-alumina.

In order to provide the solid catalyst system used it is preferred if a liquid liquid emulsion system is used. The process involves forming dispersing catalyst components (i) and (ii) in a solvent, and solidifying said dispersed droplets to form solid particles.

In particular, the method involves preparing a solution of one or more catalyst components; dispersing said solution in an solvent to form an emulsion in which said one or more catalyst components are present in the droplets of the dispersed phase; forming solid particles comprising the said catalyst, and optionally recovering said particles.

This process enables the manufacture of the solid catalyst system with improved morphology, e.g. with a predetermined spherical shape and particle size and without using any added external porous support material, such as an inorganic oxide, e.g. silica.

By the term "preparing a solution of one or more catalyst components" is meant that the catalyst forming compounds may be combined in one solution which is dispersed to the immiscible solvent, or, alternatively, at least two separate catalyst solutions for each part of the catalyst forming compounds may be prepared, which are then dispersed successively to the solvent. In an preferred embodiment for forming the solid catalyst system at least two separate solutions for each or part of said catalyst may be prepared, which are then dispersed successively to the immiscible solvent.

More preferably, a solution of the complex comprising the transition metal compound and the cocatalyst is combined with the solvent to form an emulsion wherein that inert solvent forms the continuous liquid phase and the solution comprising the catalyst components forms the dispersed phase (discontinuous phase) in the form of dispersed droplets. The droplets are then solidified to form solid catalyst particles, and the solid particles are separated from the liquid and optionally washed and/or dried. The solvent forming the continuous phase may be immiscible to the catalyst solution at least at the conditions (e. g. temperatures) used during the dispersing step.

The term "immiscible with the catalyst solution" means that the solvent (continuous phase) is fully immiscible or partly immiscible i.e. not fully miscible with the dispersed phase solution.

Preferably said solvent is inert in relation to the compounds of the catalyst system to be produced. Full disclosure of the necessary process can be found in WO03/051934.

The inert solvent must be chemically inert at least at the conditions (e.g. temperature) used during the dispersing step. Preferably, the solvent of said continuous phase does not contain dissolved therein any significant amounts of

catalyst forming compounds. Thus, the solid particles of the catalyst are formed in the droplets from the compounds which originate from the dispersed phase (i.e. are provided to the emulsion in a solution dispersed into the continuous phase).

The terms "immobilisation" and "solidification" are used herein interchangeably for the same purpose, i.e. for forming free flowing solid catalyst particles in the absence of an external porous particulate carrier, such as silica. The solidification happens thus within the droplets. Said step can be effected in various ways as disclosed in said WO03/051934. Preferably solidification is caused by an external stimulus to the emulsion system such as a temperature change to cause the solidification. Thus in said step the catalyst component (s) remain "fixed" within the formed solid particles. It is also possible that one or more of the catalyst components may take part in the solidification/immobilisation reaction.

Accordingly, solid, compositionally uniform particles having a predetermined particle size range can be obtained.

Furthermore, the particle size of the solid catalyst system used herein can be controlled by the size of the droplets in the solution, and spherical particles with a uniform particle size distribution can be obtained.

The principles for preparing two phase emulsion systems are known in the chemical field. Thus, in order to form the two phase liquid system, the solution of the catalyst component(s) and the solvent used as the continuous liquid phase have to be essentially immiscible at least during the dispersing step. This can be achieved in a known manner e.g. by choosing said two liquids and/or the temperature of the dispersing step/solidifying step accordingly.

A solvent may be employed to form the solution of the catalyst component(s). Said solvent is chosen so that it dissolves said catalyst component(s). The solvent can be preferably an organic solvent such as used in the field, comprising an optionally substituted hydrocarbon such as linear or branched aliphatic, alicyclic or aromatic hydrocarbon, such as a linear or cyclic alkane, an aromatic hydrocarbon and/or a halogen containing hydrocarbon. Examples of aromatic hydrocarbons are toluene, benzene, ethylbenzene, propylbenzene, butylbenzene and xylene. Toluene is a preferred solvent. The solution may comprise one or more solvents. Such a solvent can thus be used to facilitate the emulsion formation, and usually does not form part of the solidified particles, but e.g. is removed after the solidification step together with the continuous phase.

Alternatively, a solvent may take part in the solidification, e.g. an inert hydrocarbon having a high melting point (waxes), such as above 40°C, suitably above 70°C, e. g. above 80°C or 90°C, may be used as solvents of the dispersed phase to immobilise the catalyst compounds within the formed droplets.

In another embodiment, the solvent consists partly or completely of a liquid monomer, e.g. liquid olefin monomer designed to be polymerised in a "prepolymerisation" immobilisation step.

The solvent used to form the continuous liquid phase is a single solvent or a mixture of different solvents and may be immiscible with the solution of the catalyst components at least at the conditions (e.g. temperatures) used during the dispersing step. Preferably said solvent is inert in relation to said compounds.

The term "inert in relation to said compounds" means herein that the solvent of the continuous phase is chemically inert, i.e. undergoes no chemical reaction with any catalyst forming component. Thus, the solid particles of the catalyst are formed in the droplets from the compounds which originate from the dispersed phase, i.e. are provided to the emulsion in a solution dispersed into the continuous phase.

It is preferred that the catalyst components used for forming the solid catalyst will not be soluble in the solvent of the continuous liquid phase. Preferably, said catalyst components are essentially insoluble in said continuous phase forming solvent.

Solidification takes place essentially after the droplets are formed, i.e. the solidification is effected within the droplets e.g. by causing a solidifying reaction among the compounds present in the droplets. Furthermore, even if some solidifying agent is added to the system separately, it reacts within the droplet phase and no catalyst forming components go into the continuous phase.

The term "emulsion" used herein covers both bi-and multiphasic systems.

In a preferred embodiment said solvent forming the continuous phase is an inert solvent including a halogenated organic solvent or mixtures thereof, preferably fluorinated organic solvents and particularly semi, highly or perfluorinated organic solvents and functionalised derivatives thereof. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. $C_3$-$C_{30}$, such as $C_4$-$C_{10}$. Specific examples of suitable perfluoroalkanes and perfluorocycloalkanes include perfluoro-hexane, -heptane, - octane and -(methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science", 56 (1995) 245-287, Elsevier Science.

The emulsion can be formed by any means known in the art: by mixing, such as by stirring said solution vigorously to said solvent forming the continuous phase or by means of mixing mills, or by means of ultra sonic wave, or by using a so called phase change method for preparing the emulsion by first forming a homogeneous system which is then transferred by changing the temperature of the system to a biphasic system so that droplets will be formed.

The two phase state is maintained during the emulsion formation step and the solidification step, as, for example, by appropriate stirring.

Additionally, emulsifying agents/emulsion stabilisers can be used, preferably in a manner known in the art, for facilitating the formation and/or stability of the emulsion. For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, $NH_2$, $NR''_2$. -COOH, $-COONH_2$, oxides of alkenes, $-CR''=CH_2$, where R" is hydrogen, or $C_1$-$C_{20}$ alkyl, $C_2$-$C_{20}$ alkenyl or $C_2$-$C_{20}$ alkynyl group, oxo-groups, cyclic ethers and/or any reactive derivative of these groups, like alkoxy, or carboxylic acid alkyl ester groups, or, preferably semi-, highly- or perfluorinated hydrocarbons having a functionalised terminal, can be used. The surfactants can be added to the catalyst solution, which forms the dispersed phase of the emulsion, to facilitate the forming of the emulsion and to stabilize the emulsion.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants which bear at least one functional group selected e.g. from -OH, -SH, $NH_2$, $NR''_2$. -COOH, $-COONH_2$, oxides of alkenes, $-CR''=CH_2$, where R" is hydrogen, or $C_1$-$C_{20}$ alkyl, $C_2$-$C_{20}$ alkenyl or $C_2$-$C_{20}$ alkynyl group, oxo-groups, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

The compound reacting with such surfactant precursor is preferably contained in the catalyst solution and may be a further additive or one or more of the catalyst forming compounds. Such compound is e.g. a compound of group 13 (e.g. MAO and/or an aluminium alkyl compound and/or a transition metal compound).

If a surfactant precursor is used, it is preferably first reacted with a compound of the catalyst solution before the addition of the transition metal compound. In one embodiment e.g. a highly fluorinated $C_{1-n}$ (suitably $C_4$-$C_{30}$ or $C_5$-$C_{15}$) alcohol (e.g. highly fluorinated heptanol, octanol or nonanol), oxide (e.g. propenoxide) or acrylate ester is reacted with a cocatalyst to form the "actual" surfactant. Then, an additional amount of cocatalyst and the transition metal compound is added to said solution and the obtained solution is dispersed to the solvent forming the continuous phase. The "actual" surfactant solution may be prepared before the dispersing step or in the dispersed system. If said solution is made before the dispersing step, then the prepared "actual" surfactant solution and the transition metal solution may be dispersed successively (e. g. the surfactant solution first) to the immiscible solvent, or be combined together before the dispersing step.

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a particularly preferred embodiment, the solidification is effected after the emulsion system is formed by subjecting the system to an external stimulus, such as a temperature change. Temperature differences of e.g. 5 to 100°C, such as 10 to 100°C, or 20 to 90°C, such as 50 to 90°C.

The emulsion system may be subjected to a rapid temperature change to cause a fast solidification in the dispersed system. The dispersed phase may e. g. be subjected to an immediate (within milliseconds to few seconds) temperature change in order to achieve an instant solidification of the component (s) within the droplets. The appropriate temperature change, i. e. an increase or a decrease in the temperature of an emulsion system, required for the desired solidification rate of the components cannot be limited to any specific range, but naturally depends on the emulsion system, i. a. on the used compounds and the concentrations/ratios thereof, as well as on the used solvents, and is chosen accordingly. It is also evident that any techniques may be used to provide sufficient heating or cooling effect to the dispersed system to cause the desired solidification.

In one embodiment the heating or cooling effect is obtained by bringing the emulsion system with a certain temperature to an inert receiving medium with significantly different temperature, e. g. as stated above, whereby said temperature change of the emulsion system is sufficient to cause the rapid solidification of the droplets. The receiving medium can be gaseous, e. g. air, or a liquid, preferably a solvent, or a mixture of two or more solvents, wherein the catalyst component (s) is (are) immiscible and which is inert in relation to the catalyst component (s). For instance, the

receiving medium comprises the same immiscible solvent used as the continuous phase in the first emulsion formation step.

Said solvents can be used alone or as a mixture with other solvents, such as aliphatic or aromatic hydrocarbons, such as alkanes. Preferably a fluorinated solvent as the receiving medium is used, which may be the same as the continuous phase in the emulsion formation, e. g. perfluorinated hydrocarbon.

Alternatively, the temperature difference may be effected by gradual heating of the emulsion system, e. g. up to 10°C per minute, preferably 0.5 to 6°C per minute and more preferably in 1 to 5°C per minute.

In case a melt of e. g. a hydrocarbon solvent is used for forming the dispersed phase, the solidification of the droplets may be effected by cooling the system using the temperature difference stated above.

Preferably, the "one phase" change as usable for forming an emulsion can also be utilised for solidifying the catalytically active contents within the droplets of an emulsion system by, again, effecting a temperature change in the dispersed system, whereby the solvent used in the droplets becomes miscible with the continuous phase, preferably a fluorous continuous phase as defined above, so that the droplets become impoverished of the solvent and the solidifying components remaining in the "droplets" start to solidify. Thus the immisciblity can be adjusted with respect to the solvents and conditions (temperature) to control the solidification step.

The miscibility of e.g. organic solvents with fluorous solvents can be found from the literature and be chosen accordingly by a skilled person. Also the critical temperatures needed for the phase change are available from the literature or can be determined using methods known in the art, e. g. the Hildebrand-Scatchard-Theorie. Reference is also made to the articles of A. Enders and G. and of Pierandrea Lo Nostro cited above.

Thus according to the invention, the entire or only part of the droplet may be converted to a solid form. The size of the "solidified"droplet may be smaller or greater than that of the original droplet, e. g. if the amount of the monomer used for the prepolymerisation is relatively large.

The droplet shape of the particles may be substantially maintained. The formed particles may have an average size range of 1 to 500 μm, e.g. 5 to 500 μm, advantageously 5 to 200 μm or 10 to 150 μm Even an average size range of 5 to 60 μm is possible. The size may be chosen depending on the polymerisation the catalyst is used for. Advantageously, the particles are essentially spherical in shape, they have a low porosity and a low surface area.

The formation of solution can be effected at a temperature of 0 to 100°C, e.g. at 20 to 80°C. The dispersion step may be effected at -20 to 100°C, e.g. at about -10 to 70°C, such as at -5 to 30°C, e.g. around 0 °C.

To the obtained dispersion an emulsifying agent as defined above, may be added to improve/stabilise the droplet formation. The solidification of the catalyst component in the droplets is preferably effected by raising the temperature of the mixture, e.g. from 0 °C up to 100°C, e.g. up to 60 to 90°C, gradually. E.g. in 1 to 180 minutes, e.g. 1 to 90 or 5 to 30 minutes, or as a rapid heat change. Heating time is dependent on the size of the reactor.

During the solidification step, which is preferably carried out at about 60 to 100 °C, preferably at about 75 to 95 °C, (below the boiling point of the solvents) the solvents may preferably be removed and optionally the solids are washed with a wash solution, which can be any solvent or mixture of solvents such as those defined above and/or used in the art, preferably a hydrocarbon, such as pentane, hexane or heptane, suitably heptane. The washed catalyst can be dried or it can be slurried into an oil and used as a catalyst-oil slurry in polymerisation process.

All or part of the preparation steps can be done in a continuous manner. Reference is made to WO2006/069733 describing principles of such a continuous or semicontinuous preparation methods of the solid catalyst types, prepared via emulsion/solidification method.

The polymerization of propylene by using the above defined solid catalyst system may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase reactors.

For slurry reactors, the reaction temperature will generally be in the range 60 to 110°C (e.g. 60 to 90°C), the reactor pressure will generally be in the range 5 to 80 bar (e.g. 20 to 60 bar), and the residence time will generally be in the range 0.1 to 5 hours (e.g. 0.3 to 2 hours). Propylene is usually used as reaction medium.

For gas phase reactors, the reaction temperature used will generally be in the range 60 to 115°C (e.g. 70 to 110°C), the reactor pressure will generally be in the range 10 to 25 bar, and the residence time will generally be 0.5 to 8 hours (e.g. 0.5 to 4 hours). The gas used will be propylene optionally as mixture with a non-reactive gas such as nitrogen or propane. In addition to actual polymerisation steps and reactors, the process can contain any additional polymerisation steps, like prepolymerisation step, and any further after reactor handling steps as known in the art.

Generally the quantity of solid catalyst system used will depend upon the nature of the catalyst, the reactor types and conditions and the properties desired for the polymer product. As is well known in the art hydrogen can be used for controlling the molecular weight of the polymer.

The present invention will now be described in further detail by the examples and comparison examples.

## EXAMPLES

### A. Measuring methods

The following definitions of terms and determination methods apply for the above general description of the invention as well as to the below examples unless otherwise defined.

### Quantification of microstructure by NMR spectroscopy

Quantitative nuclear-magnetic resonance (NMR) spectroscopy was used to quantify the stereo-regularity (tacticity) and regio-regularity of the polymers.

Quantitative $^{13}C$ {$^{1}H$} NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C${$^{1}H$} NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm\ /\ \text{sum of all pentads})$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio

defects:

$$P_{total} = P_{12} + P_{21e}$$

The mole percent of 2,1 erythro regio defects was quantified with respect to all propene:

$$[21e]\ mol\% = 100 * ( P_{21e} / P_{total} )$$

**$MFR_2$ (230 °C)** is measured according to ISO 1133 (230 °C, 2.16 kg load)

**The xylene solubles (XCS, wt.-%):** Content of xylene cold solubles (XCS) is determined at 25 °C according ISO 16152; first edition; 2005-07-01.

**Melting temperature ($T_m$) and heat of fusion ($H_f$), crystallization temperature ($T_c$) and heat of crystallization ($H_c$):** measured with Mettler TA Q2000 differential scanning calorimetry (DSC) on 5 to 10 mg samples. DSC is run according to ISO 11357-3:1999 in a heat / cool / heat cycle with a scan rate of 10 °C/min in the temperature range of +23 to +210°C. Crystallization temperature and **heat of crystallization** ($H_c$) are determined from the cooling step, while melting temperature and **heat of fusion** ($H_f$) are determined from the second heating step.

**Porosity:** BET with $N_2$ gas, ASTM 4641, apparatus Micromeritics Tristar 3000; sample preparation: at a temperature of 50 °C, 6 hours in vacuum.

**Surface area:** BET with $N_2$ gas ASTM D 3663, apparatus Micromeritics Tristar 3000: sample preparation at a temperature of 50 °C, 6 hours in vacuum.

**Compression moulding:**

Samples have been prepared according to ISO 173-2, on a frame mould:
Conditions for compression moulding of test specimens:

| | | |
|---|---|---|
| Moulding temperature | [°C] | 210 |
| Average cooling rate | [°C/min] | 15 |
| Demoulding temperature | [°C] | ≤ 40 |
| Full Pressure | [MPa] | 5 |
| Full-pressure time | [min] | 5 |
| Preheating pressure | [MPa] | none |
| Preheating time | [min] | 10 |

**WAXS (Wide angle X-ray Scattering) measurement:**

To measure wide-angle X-ray scattering (WAXS) of the samples a Bruker D8 Discover was used. The diffractometer was equipped with an X-ray tube with a copper target operating at 30 kV and 20mA and a GADDS 2-D detector. To direct the beam onto the surface, a point collimation (0.5 mm) was used. The measurement was done in reflection geometry, and 28 angle in the range from 10° to 32.5° were measured. Data were collected for 300 s.

Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined with the area under the crystalline curve and the original spectrum using Challa, Hermans and Weidinger method [Challa G, Hermans PH, Weidinger A, Makromol. Chem. 56, 169 (1962)] as:

$$X_c = \frac{\text{area under crystalline curve}}{\text{area under original spectrum}} \times 100$$

The amount of β-form of the polypropylene within the crystalline phase $K_\beta$ is calculated using Jones method [Turner-Jones A, Aizlewood JM, Beckett DR, Makromol. Chem. 75, 134 (1974)] according to the following equation:

$$K_\beta = \frac{I^\beta(300)}{I^\alpha(110) + I^\alpha(040) + I^\alpha(130) + I^\beta(300)}$$

where, $I^\beta(300)$ is the intensity of $\beta(300)$ peak, $I^\alpha(110)$ is the intensity of $\alpha(110)$ peak, $I^\alpha(040)$ is the intensity of $\alpha(040)$ peak and $I^\alpha(130)$ is the intensity of $\alpha(130)$ peak obtained after subtracting the amorphous halo.

The amount of $\gamma$-form of iPP within the crystalline phase $K\gamma$ is calculated using the method developed by Pae [Pae KD, J. Polym. Sci., Part A, 6, 657 (1968)] as:

$$K_\gamma = \frac{I^\gamma(117)}{I^\alpha(130) + I^\gamma(117)}$$

where, $I^\alpha(130)$ is the intensity of $\alpha(130)$ peak and $I^\gamma(117)$ is the intensity of $\gamma(117)$ peak obtained after subtracting a base line joining the base of these peaks.

Quantification of three-phase crystalline system has been carried out following the procedure explained in Obadal M, Cermak R, Stoklasa K, Macromol. Rapid Commun. 26, 1253 (2005). For three-phase crystalline systems the following equations have been used to determine $K\alpha$ (amount of $\alpha$-phase), $K\beta$ (amount of $\beta$-phase) and $K\gamma$ (amount of $\gamma$-phase):

$$K_\beta = \frac{I^\beta(300)}{I^\alpha(110) + I^\alpha(040) + I^\alpha(130) + I^\beta(300) + I^\gamma(117)}$$

$$K_{\alpha+\gamma} = 1 - K_\beta,$$

$$K_\gamma = G \times K_{\alpha+\gamma},$$

and

$$K_\alpha = 1 - K_\beta - K_\gamma$$

## B. Examples

### B.1 Preparation of the metallocenes

**Metallocene MC1** is rac-dimethylsilanediylbis[2-methyl-4-(3,5-di-tert-butylphenyl)-7-methoxy-indenyl]hafnium dichloride, and was synthesized as described by Rieger and Schöbel in Chemistry-A European Journal, Volume 18, Issue 14, April 2, 2012, Pages: 4174-4178, supporting information.

**Metallocene MC2** is rac-dimethylsilanediylbis(2-iso-butyl-4-phenyl-5-methoxy-6-tert-butylinden-1-yl) zirconium dichloride, and was synthesized as described below:

**Reagents and general procedures:** All manipulations with air and moisture sensitive compounds were performed either in an atmosphere of thoroughly purified argon using a standard Schlenk technique or in a controlled atmosphere Glove Box. *Tert*-Butyl-2-methoxybenzene was obtained from 2-*tert*-butylphenol (Merck) and dimethylsulfate (Merck) in the presence of 40% NaOH (Reachim) and "$Bu_4NBr$ (Acros) in dichloromethane as described in [WO 2007116034, 2007 for Basell Polyolefine GmbH]. Diethyl malonate (Acros), isobutylbromide (Acros), pivaldehyde (Acros), diethylamine (Acros), paraform (Acros), methanesulfonic acid (Aldrich), $Et_4NI$ (Acros), $Pd(OAc)_2$ (Aldrich), $NaBPh_4$ (Aldrich), di-*tert*-butyl(2'-methyl-2-biphenyl)phosphine (Aldrich), TsOH (Acros), 2.5 M $^nBuLi$ in hexanes (Chemetall), $NaBH_4$ (Aldrich), CuCN (Merck), $ZrCl_4(THF)_2$ (Aldrich), silica gel 60 (40-63 um, Merck), bromine (Merck), KOH (Merck), $Na_2SO_4$ (Akzo Nobel), 12 M HCl (Reachim, Russia), methanol (Merck), $CDCl_3$ (Deutero GmbH), $CH_2Cl_2$ (Merck), 96% ethanol (Merck), anhydrous ethanol (Merck), methanol (Merck), potassium acetate (Acros), $Na_2SO_3$ (Merck), $Na_2CO_3$ (Merck), $K_2CO_3$ (Merck), $ZnCl_2$ (Merck), $P_4O_{10}$(Merck), sodium lump (Merck), hydrogen gas (Linde), acetic anhydride (Acros), tetrahydrofurane (Merck), hexanes (Merck), toluene (Merck), ethyl acetate (Merck),

diethyl ether (Merck) for extractions and dichloromethane (Merck) were used as received. Tetrahydrofurane (Merck) and diethyl ether (Merck) freshly distilled from benzophenone ketyl were used for organometallic synthesis and catalysis. DMF (Merck) was dried and distilled over $CaH_2$. $CD_2Cl_2$ (Deutero GmbH) for NMR experiments was dried and kept over $CaH_2$. Toluene (Merck) and hexanes (Merck) for organometallic synthesis were kept and distilled over Na/K alloy.

**Isobutylmalonic acid:** To a solution of sodium ethoxide obtained from 46.0 g (2.00 mol) of sodium lump and 1000 $cm^3$ of anhydrous ethanol 320 g (2.00 mol) of diethyl malonate was added at room temperature. The obtained mixture was stirred for 30 min at this temperature, and then 274 g (2.00 mol) of isobutylbromide was added. The resulting mixture was refluxed for 5 h, and then ethanol was distilled off. To the cooled residue 1500 ml of cold water and 500 ml of ethyl acetate were added. The organic layer was separated, dried over $Na_2SO_4$ and then evaporated to dryness. Fractional rectification of the residue gave 357 g of colorless liquid, bp 177-187°C/220 mm Hg. This product contained ca. 10% of diethyl malonate. To a solution of 117.3 g (542 mmol) of diethyl isobutylmalonate in 500 ml of methanol a solution of 125 g of potassium hydroxide in 1000 $cm^3$ of water was added. The resulting mixture was refluxed for 5 h, then ethanol and methanol were distilled off. Further on, 1000 $cm^3$ of water was added, and then this mixture was acidified by 12 M HCl to pH 1.0. Isobutylmalonic acid was extracted by 4 x 500 ml of ether. The combined extract was evaporated to dryness. To the residue 300 ml of toluene was added. Again, the obtained mixture was evaporated to dryness to remove moisture. To a solution of the residue in 150 ml of toluene 500 ml of hexanes was added. The formed precipitate was filtered off, washed by 50 ml of hexanes and dried in vacuum. This procedure gave 72.8 g (84%) of the title product as white crystalline solid. Anal. calc. for $C_7H_{12}O_4$: C, 52.49; H, 7.55. Found: C, 52.18; H, 7.71. $^1H$ NMR ($CDCl_3$): $\delta$ 11.75 (br.s, 2H, $CO_2H$), 3.52 (t, J = 7.6 Hz, 1H, $CHCO_2H$), 1.83 (dt, J = 7.6 Hz, J = 6.6 Hz, 2H, $CH_2$), 1.65 (d-sept, J = 7.6 Hz, J = 6.6 Hz, 1H, $Me_2CH$), 0.94 (d, J = 6.6 Hz, 6H, $Me_2$CH). $^{13}C$ NMR ($CDCl_3$): $\delta$ 175.5, 49.9, 37.4, 28.1, 22.1.

**2-Isobutylacrylic acid:** To a solution of 72.9 g (0.455 mol) of isobutylmalonic acid in 650 ml of ethyl acetate 54.2 ml (38.3 g, 0.524 mol) of diethylamine was added dropwise at 5°C. To the obtained suspension 19.2 g (0.640 mol) ofparaform was added. The resulting mixture was refluxed for 5 h, then cooled to 5°C, and 350 ml of ether and 1000 $cm^3$ of 2M HCl were added. After mixing the organic layer was separated, the aqueous layer was additionally extracted with 2 x 500 ml of ether. The combined organic extract was dried over $Na_2SO_4$ and then evaporated to dryness. Rectification of the residue in vacuum gave the title product, bp 75-77°C/6 mm Hg. Yield 51.5 g (88%) of colorless liquid. Anal. calc. for $C_7H_{12}O_2$: C, 65.60; H, 9.44. Found: C, 65.78; H, 9.53. $^1H$ NMR ($CDCl_3$): $\delta$ 12.0 (br.s, 1H, $CO_2H$), 6.31 (d, J = 1.5 Hz, 1H, *C*HH'=C), 5.60 (m, 1H, CH*H'*=C), 2.17 (dd, J = 7.1 Hz, J = 0.9 Hz, 2H, $^iPrCH_2$), 1.82 (nonet, J = 6.7 Hz, 1H, C*H*$Me_2$), 1.82 (d, J = 6.7 Hz, 6H, $CHMe_2$). $^{13}C$ NMR ($CDCl_3$): $\delta$ 173.3, 139.2, 128.2, 40.9, 27.1, 22.2.

**6-*tert*-Butyl-2-isobutyl-5-methoxyindan-1-one:** To Iton reagent (obtained from 110 g of $P_4O_{10}$ and 560 ml of methanesulfonic acid at 110°C) a mixture of 59.4 g (0.362 mol) of 1-*tert*-butyl-2-methoxybenzene and 51.5 g (0.402 mol) of 2-isobutylacrylic acid was added dropwise at vigorous stirring in such a rate to maintain temperature at 60$\pm$1°C (for ca. 40 min). The resulting mixture was stirred for 40 min at 65°C, cooled to room temperature, and then poured on 1000 $cm^3$ of ice with 1000 $cm^3$ of water. The product was extracted by 3 x 500 ml of dichloromethane. The combined organic extract was washed by aqueous $K_2CO_3$, dried over $Na_2SO_4$ and then evaporated to dryness. Fractional rectification of the residue gave dark red oil, b.p. 165-174°C/5 mm Hg. This oil was recrystallized from 100 ml of hexanes. White crystals precipitated at 5°C were collected, washed by 20 ml of cold hexanes, and dried in vacuum. Yield 24.9 g (25%) of the title product. Anal. calc. for $C_{18}H_{26}O_2$: C, 78.79; H, 9.55. Found: C, 78.65; H, 9.42. $^1H$ NMR ($CDCl_3$): $\delta$7.66 (s, 1H, 7-H in indanone), 6.85 (s, 1H, 4-H in indanone), 3.91 (s, 3H, OMe), 3.22 (dd, J = 17.0 Hz, J = 7.5 Hz, 1H, 3-H in indanone), 2.70 (dd, J = 17.0 Hz, J = 3.7 Hz, 1H, 3'-H in indanone), 2.65 (m, 1H, 2-H in indanone), 1.80 (m, 2H, *C*HH'$CHMe_2$ and C*H*$Me_2$), 1.36 (s, 9H, $^tBu$), 1.25 (m, 1H, CH*H'*$CHMe_2$), 0.96 (d, J = 6.3 Hz, 6H, CH*Me*$_2$). $^{13}C$ NMR ($CDCl_3$): $\delta$ 208.0, 164.6, 154.6, 138.8, 129.2, 122.0, 107.8, 55.2, 46.1, 41.0, 35.1, 33.1, 29.6, 26.7, 23.5, 21.7. **4-Bromo-6-*tert*-butyl-2-isobutyl-5-methoxyindan-1-one**: To a mixture of 24.9 g (90.9 mmol) of 6-*tert*-butyl-2-isobutyl-5-methoxyindan-1-one, 25.8 g of potassium acetate, 0.5 g of $Et_4NI$, 50 ml of dichloromethane and 150 ml of water 4.66 ml (14.5 g, 90.9 mmol) of bromine was added dropwise by vigorous stirring at 5°C for 5 min. This mixture was stirred at 5°C for 3 h, then 15.2 g of potassium acetate was added, and finally 2.56 ml (8.24 g, 51.6 mmol) of bromine was added. The resulting mixture was additionally stirred at this temperature for 1 h. and then washed by aqueous $Na_2SO_3$ to remove an excess of bromine. The product was extracted by 3 x 150 ml of dichloromethane, The combined organic extract was dried over $K_2CO_3$, evaporated to dryness, and the residue was dried in vacuum. This procedure gave 31.9 g (99%) of yellowish crystalline material which was further used without an additional purification. Anal. calc. for $C_{18}H_{25}BrO_2$: C, 61.19; H, 7.13. Found: C, 60.98; H, 6.99. $^1H$ NMR ($CDCl_3$): $\delta$ 7.66 (s, 1H, 7-H in indanone), 3.99 (s, 3H, OMe), 3.20 (dd, J = 17.1 Hz, J = 7.4 Hz, 1H, 3-H in indanone), 2.68 (m, 1H, 2-H in indanone), 2.62 (dd, J = 17.1 Hz, J = 3.8 Hz, 1H, 3'-H in indanone), 1.80 (m, 2H, *C*HH'$CHMe_2$ and C*H*$Me_2$), 1.37 (s, 9H, $^tBu$), 1.27 (m, 1H, CH*H'*$CHMe_2$), 0.96 (d, J = 6.3 Hz, 6H, CH*Me*$_2$). $^{13}C$ NMR ($CDCl_3$): $\delta$ 207.8, 162.7, 154.1, 145.4, 133.0, 121.4, 116.6, 61.6, 46.1, 40.7, 35.6, 34.5, 30.6, 26.5, 23.6, 21.6.

**6-*tert*-Butyl-2-isobutyl-5-methoxy-4-phenylindan-1-one:** A mixture of 31.9 g (90.3 mmol) of 4-bromo-6-*tert*-butyl-2-isobutyl-5-methoxyindan-1-one, 12.7 g (37.1 mmol) of $NaBPh_4$, 0.223 g (0.993 mmol, 1.1 mol. %) of $Pd(OAc)_2$, 0.464 g (1.49 mmol, 1.65 mol. %) of di-*tert*-butyl(2'-methyl-2-biphenylyl)phosphine, 20.0 g of $Na_2CO_3$, 300 ml of THF and 150 ml of water was refluxed for 10 h. Further on, 500 ml of water was added, and the product was extracted with 3 x 200 ml of dichloromethane. The combined organic extract was dried over $K_2CO_3$ and then evaporated to dryness. The product was isolated by flash-chromatography on silica gel 60 (40-63 um, eluent: hexanes-dichloromethane = 2:1 and then 1:1, vol.). Yield 15.7 g (50%) of yellowish crystalline material. Anal. calc. for $C_{24}H_{30}O_2$: C, 82.24; H, 8.63. Found: C, 82.38; H, 8.77. $^1$H NMR ($CDCl_3$): $\delta$ 7.74 (s, 1H, 7-H in indanone), 7.35-7.51 (m, 5H, Ph), 3.27 (s, 3H, OMe), 3.05 (dd, J = 17.4 Hz, J = 7.6 Hz, 1H, 3-H in indanone), 2.62 (m, 1H, 2-H in indanone), 2.50 (dd, J = 17.4 Hz, J = 3.3 Hz, 1H, 3'-H in indanone), 1.79 (m, 1H, C*H*H'CHMe$_2$), 1.70 (m, 1H, C*H*Me$_2$), 1.41 (s, 9H, $^t$Bu), 1.25 (m, 1H, CH*H*'CHMe$_2$), 0.96 (d, J = 5.5 Hz, 3H, CH*Me*Me'), 0.96 (d, J = 5.5 Hz, 3H, CHMe*Me*'). $^{13}$C NMR ($CDCl_3$): $\delta$ 208.6, 163.4, 152.8, 143.4, 136.4, 132.5, 131.4, 129.5, 128.7, 127.5, 121.5, 60.5, 46.1, 40.7, 35.4, 32.6, 30.5, 26.4, 23.5, 21.4.

**5-*tert*-Butyl-2-isobutyl-6-methoxy-7-phenyl-1H-indene:** To a solution of 9.0 g (25.7 mmol) of 6-*tert*-butyl-2-isobutyl-5-methoxy-4-phenylindan-1-one in 100 ml of THF and 50 ml of methanol 10.0 g (0.265 mol) of $NaBH_4$ was added by small portions by vigorous stirring for ca. 1.5 h at room temperature. This mixture was additionally stirred overnight and then acidified by 2 M HCl to pH 1. The product was extracted with 3 x 150 ml of dichloromethane. The organic extract was evaporated to dryness, and a mixture of the residue with 150 ml of toluene and 0.5 g ofTsOH was refluxed for 15 min using Dean-Stark head. The obtained solution was washed by 10% aqueous $K_2CO_3$. The organic layer was separated, and the aqueous layer was extracted with 2 x 50 ml of dichloromethane. The combined organic extract was dried over $K_2CO_3$, evaporated to dryness, and then passed through short layer of silica gel 60 (40-63 um). The silica gel layer was additionally washed by hexanes-dichloromethane (1:1, vol.). The elute was evaporated to dryness, and the residue was dried in vacuum. This procedure gave 8.52 g (99%) of yellowish oil of the title product which was further used without an additional purification. Anal. calc. for $C_{24}H_{30}O$: C, 86.18; H, 9.04. Found: C, 86.35; H, 9.12. $^1$H NMR ($CDCl_3$): $\delta$ 7.48-7.51 (m, 2H, 2,6-H in Ph), 7.41-7.46 (m, 2H, 3,5-H in Ph), 7.32-7.37 (m, 1H, 4-H in Ph), 7.25 (d, J = 1.9 Hz, 1H, 4-H in indene), 6.46 (m, 1H, 3-H in indene), 3.22 (s, 3H, OMe), 3.12 (m, 2H, 1,1'-H in indene), 2.26 (d, J = 7.1 Hz, 2H, C*H*$_2$CHMe$_2$), 1.80 (sept, J = 6.8 Hz, 1H, C*H*Me$_2$), 1.44 (s, 9H, $^t$Bu), 0.89 (d, J = 6.6 Hz, 6H, CH*Me*$_2$). $^{13}$C NMR ($CDCl_3$): $\delta$ 149.2, 141.6, 141.1, 140.6, 139.4, 138.5, 131.6, 129.6, 128.4, 127.2, 126.9, 117.4, 60.7, 41.3, 40.8, 35.2, 31.0, 28.2, 22.6. **Bis(2-isobutyl-4-phenyl-5-methoxy-6-*tert*-butyl-1*H*-inden-1-yl)(dimethyl)silane:** To a solution of 8.50 g (25.4 mmol) of 5-tert-butyl-2-isobutyl-6-methoxy-7-phenyl-1*H*-indene in 250 ml of ether 10.2 ml (25.5 mmol) of 2.5 M $^n$BuLi in hexanes was added at -50°C. This mixture was stirred for 12 h at room temperature, cooled again to -50°C, and then 0.100 g (1.12 mmol) of CuCN was added. Further on, this mixture was stirred for 15 min at -25°C, cooled to -40°C, and 1.64 g (12.7 mmol) of dichlorodimethylsilane was added in single portion. The resulting mixture was stirred overnight at room temperature, and then 0.5 ml of water and 100 ml of benzene were added. This mixture was filtered through short layer of silica gel 60 (40-63 um). This layer was additionally washed by 100 ml of dichloromethane. The obtained filtrate was evaporated to dryness, and the residue was dried in vacuum. This procedure gave 9.18 g (99%) of yellowish solid which was found to be a ca. 1 to 1 mixture of *rac*- and *meso*-compounds. Anal. calc. for $C_{50}H_{64}O_2Si$: C, 82.82; H, 8.90. Found: C, 83.07; H, 9.10. $^1$H NMR ($CDCl_3$): $\delta$ 7.42-7.57 (m, 16H, 2,3,5,6-H in Ph of *rac*- and *meso*-compounds), 7.33-7.40 (m, 8H, 4-H in Ph and 7-H in indenyl of *rac*- and *meso*-compounds), 6.47 (s, 2H, 3-H in indenyl of *meso*-compound), 6.32 (s, 2H, 3-H in indenyl of *rac*-compound), 3.69 (s, 2H, 1-H in indenyl of *meso*-compound), 3.67 (s, 2H, 1-H in indenyl of *rac*-compound), 3.24 (s, 12H, OMe of *rac*- and *meso*-compounds), 2.25-2.43 (m, 6H, ), 1.83-2.03 (m, 6H,), 1.46 (s, 18H, $^t$Bu in *rac*-compound), 1.44 (s, 18H, $^t$Bu in *meso*-compound), 0.92 (d, J = 6.6 Hz, 6H, CH*Me*Me' of *meso*-compound), 0.84 (d, J = 6.6 Hz, 6H, CHMe*Me*' of *meso*-compound), 0.82 (d, J = 6.6 Hz, 6H, CH*Me*Me' of *rac*-compound), 0.71 (d, J = 6.6 Hz, 6H, CHMe*Me*' of *rac*-compound), -0.06 (s, 6H, Me$_2$Si of *rac*-compound), -0.14 (s, 3H, *Me*Me'Si of *meso*-compound), -0.36 (s, 3H, Me*Me*'Si of *meso*-compound). $^{13}$C NMR ($CDCl_3$): $\delta$ 155.4, 155.3, 151.9, 151.2, 143.6, 143.4, 139.5, 139.4, 138.4, 138.3, 137.2, 137.0, 130.30, 130.27, 128.25, 128.22, 127.34, 127.29, 126.60, 126.57, 126.7, 125.3, 120.7, 120.5, 60.52, 60.50, 45.8, 45.7, 41.4, 40.7, 35.20, 35.15, 31.28, 31.24, 28.9, 28.8, 23.30, 23.27, 22.2, 22.0, -4.2, -4.3, -5.1.

**Dimethylsilandiylbis(2-isobutyl-4-phenyl-5-methoxy-6-*tert*-butyl-1*H*-inden-1-y])zirconium dichloride:** To a solution of 9.18 g (12.7 mmol) of bis(6-*tert*-butyl-2-isobutyl-5-methoxy-4-phenyl-1*H*-inden-1-yl)(dimethyl)silane in 200 ml of ether 10.1 ml (25.3 mmol) of 2.5 M "BuLi in hexanes was added at -60°C. This mixture was stirred for 4.5 h at room temperature, then cooled to -60°C, and 4.78 g (12.7 mmol) of $ZrCl_4(THF)_2$ was added. The resulting mixture was stirred for 24 h at room temperature and then evaporated to dryness. To orange-red crystalline residue 150 ml of toluene was added. This mixture was heated to 70°C, filtered through glass frit (G3), and the filtrate evaporated to ca. 35 ml. Further on, 65 ml of hexanes was added. The suspension formed was heated to dissolve the precipitate. Red crystals precipitated from this mixture at room temperature were collected and dried in vacuum. This procedure gave 1.06 g (10%) of pure *meso*-complex. The mother liquid was evaporated to ca. 40 ml, heated to dissolve the precipitate formed. Orange crystals precipitated from this solution at -30°C were collected, dried in vacuum. Yield 3.01 g (27%) of *rac*-complex including ca. 3% of *meso*-complex which was additionally purified via crystallization from hexanes-toluene

(1:1, vol.) to give analytically pure *rac*-complex as solvate with toluene. On the evidence of NMR spectroscopy, this sample included 0.88 toluene molecule per metallocene molecule. *Rac*-Dimethyl silanediylbis(2-isobutyl-4-phenyl-5-methoxy-6-*tert*-butyl-1*H*-inden-1-yl)zirconium dichloride, toluene solvate (0.88 $C_7H_8$): Anal. calc. for $C_{56.16}H_{70.04}Cl_2O_2SiZr$: C, 69.80; H, 7.31. Found: C, 69.86; H, 7.26. $^1$H NMR ($CD_2Cl_2$): δ 7.61 (br.m, 4H, 2,6-H in Ph of the complex), 7.54 (s, 2H, 7-H in indenyl), 7.44 (m, 4H, 3,5-H in Ph of the complex), 7.35 (m, 2H, 4-H in Ph of the complex), 7.12-7.25 (m, 0.88 x 5H, Ph in toluene), 6.55 (s, 2H, 3-H in indenyl), 3.35 (s, 6H, OMe), 2.61 (dd, J = 13.6 Hz, J = 7.2 Hz, 2H, C*H*H'$CH_2Me_2$), 2.34 (s, 0.88 x 3H, Me in toluene), 2.03 (dd, J = 13.6 Hz, J = 7.3 Hz, 2H, CH*H*'$CH_2Me_2$), 1.64 (m, 2H, C*H*$Me_2$), 1.40 (s, 18H; $^t$Bu), 1.31 (s, 6H, $SiMe_2$), 0.84 (d, J = 6.6 Hz, 6H, CH*Me*Me'), 0.76 (d, J = 6.6 Hz, 6H, CHMe*Me*'). $^{13}$C NMR ($CD_2Cl_2$): δ 161.5, 145.6, 142.0, 138.6, 135.2, 131.4, 130.0, 128.9, 128.5, 124.7, 123.0, 121.4, 83.4, 64.0, 43.5, 37.3, 34.1, 31.7, 23.8, 23.5, 5.0.

**Metallocene MC3** is rac-dimethylsilanediylbis[2-methyl-4-(3,5-di-tert-butylphenyl)-7-methoxy-indenyl] zirconium dichloride, and was synthesized as described by Rieger and Schöbel in Chemistry-A European Journal, Volume 18, Issue 14, April 2, 2012, Pages: 4174-4178, supporting information.

**B.2 Preparation of the catalysts**

**Catalyst 1:** MC1 has been activated and used in polymerization as described below in B.3 polymerization example 1 (see also Chemistry-A European Journal, Volume 18, Issue 14, April 2, 2012, Pages: 4174-4178, supporting information).

**Catalyst 2:** MC2 has been used in the preparation of the solid prepolymerized catalyst as described in WO 2011/135005, catalyst example 2E2.

**Catalyst 3:** MC3 has been used in the preparation of the solid prepolymerized catalyst as described in below:

**MAO activated catalysts:** The catalyst was prepared according to the procedure described in the Example 5 of WO 2003/051934 with hexadecafluoro-1,3-dimethylcyclohexane as the immiscible solvent, a mixture of perfluoroalkylethyl acrylate esters having different perfluoroalkyl chain lengths as the surfactant precursor. The detailed catalyst preparation was performed as follows:

Inside a glovebox, 80 μL of a commercial mixture of dry and degassed perfluoroalkylethyl acrylate esters were mixed with 2 mL of MAO in a septum bottle and left to react overnight (surfactant solution). The following day, 69.4 mg of the metallocene MC3 were dissolved in 4 mL of the MAO solution in another septum bottle and left to stir inside the glovebox (catalyst solution).

After 60 minutes, the 4 mL of the catalyst solution and 1 mL of the surfactant solution were successively added into a 50 mL emulsification glass reactor containing 40mL of hexadecafluoro-1,3-dimethylcyclohexane at -10 °C and equipped with an overhead stirrer (stirring speed = 600 rpm). A red-orange emulsion formed immediately and was stirred during 15 minutes at 0 °C / 600rpm. The emulsion was then transferred via a 2/4 Teflon tube to 100mL of hot hexadecafluoro-1,3-dimethylcyclohexane at 90 °C, and stirred at 600 rpm until the transfer was completed. The stirring speed was reduced to 300 rpm and the oil bath was removed. Stirring was continued at room temperature for 15 more minutes. When the stirrer was switched off, the catalyst was left to settle up on top of the continuous phase which was siphoned off after 45 minutes. The remaining red solid catalyst was dried during 2 hours at 50 °C over an argon flow.

**Catalyst prepolymerization:** Off-line pre-polymerisation of catalyst MC3 was done in a 125 mL pressure reactor equipped with gas-feeding lines and an overhead stirrer. Dry and degassed perfluoro-1,3-dimethylcyclohexane (15 cm3) and 579 mg of the red catalyst to be pre-polymerised were loaded into the reactor inside a glovebox and the reactor was sealed. The reactor was then taken out from the glovebox and placed inside a water cooled bath at 25°C. The overhead stirrer and the feeding lines were then connected. The feeding line was pressurized with hydrogen, and the experiment was started by opening the valve between the H2 feed line and the reactor. At the same time propylene feed was started through the same H2 feeding line in order to ensure that all the hydrogen would be fed into the reactor. The propylene feed was left open, and the monomer consumption was compensated by keeping the total pressure in the reactor constant (5 bar). The experiment was continued for 22 min until a degree of polymerisation of 1.1 g/g was reached. The reactor was then taken back inside the glovebox before opening and the content was poured into a glass vessel. The perfluoro-1,3-dimethylcyclohexane was evaporated until a constant weight was obtained to yield a pre-polymerised pink catalyst. The degree of prepolymerisation was determined gravimetrically.

**B.3 Polymerisation examples**

**Example 1: Propylene polymerization with Catalyst 1 (MC1) to give polypropylene PP1.**

Polymerization was performed in toluene at 0°C in a 1-L Büchi steel autoclave at constant pressure and temperature. The autoclave was first charged with 300 ml toluene and 3 mL of a 1.1 M TIBA solution in toluene and stirred for 1 h at 90 °C. After cooling to room temperature and removing this solution, the autoclave was charged with 280 mL toluene and 1 mL of a 1.1 M TIBA solution in toluene. The metallocene MC1 was dissolved in 10 mL of toluene, 200 eq of TIBA were added and subsequently the mixture was stirred for 1 h at 60

°C. An amount of this solution corresponding to 4 μmol of MC1 was added via syringe into the autoclave, which was then cooled to 0°C. Afterwards the propene pressure was adjusted to 3 bar-g. The polymerization was started by adding the trityl

tetrakis(pentafluorophenyl)borate solution (5 eq in 10 mL toluene) via a pressure burette into the autoclave. The propene consumption was measured with a gas flow meter (Bronkhorst F-111C-HA-33P). The pressure (Bronkhorst pressure controller P-602C-FAC-33P) and temperature (Thermo Scientific HAAKE DynaMax) were kept constant during the entire polymerization procedure. Pressure, temperature and propene consumption were also monitored and recorded online during the whole polymerization process. The polymerization reaction was quenched after 197 min with methanol. Subsequently the autoclave content was poured into acidified methanol. The polymer was filtered off, washed exhaustively with methanol and dried in vacuum at 80 °C for several hours. Properties of the polypropylene are listed in table 1. A moulded product thereof is obtained by the process indicated above.

**Example 2 (comparison): Propylene polymerization with Catalyst 2 (MC2) to give polypropylene PP2.**

This is described in example 2a of WO2011135005.

**Example 3: Propylene polymerization with Catalyst 3 (MC3) to give polypropylene PP3.**

A stirred autoclave (double helix stirrer) with a volume of 21.2 $dm^3$ containing ~0.4 bar-g of propylene was filled with additional 5.43 kg propylene. After adding 0.4 NL $H_2$ and 0.97 mmol of triethylaluminium (1 molar solution in hexane) using a stream of 246 g propylene, the solution was stirred at 20°C and 150 rpm. After 20 min the reactor temperature was increased to 40 °C and 200 mg of the solid, pre-polymerized catalyst (degree of pre-polymerisation 1.1) was contacted with 5 ml perfluoro-1,3-dimethylcyclohexane under $N_2$-pressure for 60 sec into a 5-mL stainless steel vial, and flushed into the reactor with 246 g propylene. After that the stirring speed was increased to 350 rpm and the reactor was heated to 70°C. After 120 min, the reaction was stopped by adding 5 ml methanol, cooling the reactor and flashing the volatile ingredients. After purging the reactor 3 times with $N_2$ and one vacuum/$N_2$ cycle, the product was taken out and dried over night in a hood and additionally 2 hours in a vacuum drying oven at 60°C to yield 1412 g of polypropylene. After weighing, the material was additivated with 0.2w% Ionol and 0.1w%PEPQ. The polymer had an MFR(2) of 2.4 g/10min. The other polymer properties are listed in table 1.

**Table 1**: Properties of the polypropylenes and moulded products thereof

| | | **Ex. 1** | **Ex. 2 (comparative)** | **Ex. 3** |
|---|---|---|---|---|
| Catalyst | [-] | MC1 | MC2 | MC3 |
| Polymer | | PP1 | PP2 | PP3 |
| mmmm | [%] | 99.7 | 99.4 | 99.3 |
| mrrm | [%] | 0.06 | 0.11 | 0.15 |
| 2,1 regio defects | [%] | 0 | 1.48 | 0.47 |
| Tm | [°C] | 170 | 146 | 157 |
| XCS | [wt.-%] | <0,3 | 0.5 | 0.3 |
| β-value powder | [%] | 0 | 0 | 0 |
| β-value moulded | [%] | 48 | 8 | 15 |

## Claims

1. A moulded propylene homopolymer product, comprising at least 90 wt% of a polypropylene homopolymer having

   (a) a pentad isotacticity (mmmm) of equal or more than 98.0 mol.-% as determined by $^{13}C$ NMR spectroscopy,
   (b) a melting temperature ($T_m$) measured by differential scanning calorimetry (DSC) of at least 140.0 °C, and
   (c) a beta-phase content ranging from 10 to 90%, wherein said β-phase is measured via wide angle x-ray scattering (WAXS),

   wherein said moulded propylene homopolymer product and/or said propylene homopolymer is free of a beta-nucleating agent.

2. The moulded propylene homopolymer product according to claim 1, wherein the moulded propylene homopolymer product and/or propylene homopolymer has/have

   (a) a content of mrrm stereo-defect of below 1.0 mol.%,
   and/or
   (b) <2,1> erythro regio-defects of equal or more than 0.1 to equal or below 1.2 mol.-%, preferably of equal or more than 0.10 to equal or below 0.80 mol. %.

3. The moulded propylene homopolymer product according to claim any one of claims 1 to 2, wherein the moulded propylene homopolymer product and/or propylene homopolymer has/have

   (a) a melt flow rate $MFR_2$ (230 °C) measured according to ISO 1133 of not more than 10.0 g/10min.
   and/or
   (b) a melting temperature ($T_m$) measured by differential scanning calorimetry (DSC) of 147 to 175 °C.

4. The moulded propylene homopolymer product according to claim any one of claims 1 to 3, wherein the moulded propylene homopolymer product and/or propylene homopolymer has/have a xylene cold soluble fraction (XCS) determined at 25 °C according ISO 16152 of equal or below 1.5 wt.-%.

5. The moulded propylene homopolymer product according to claim any one of claims 1 to 4, the moulded propylene homopolymer product being compression moulded.

6. The moulded propylene homopolymer product according to any one of claims 1 to 5, excluding a product size of 30x5x0.6 mm.

7. The moulded propylene homopolymer product according to any one of claims 1 to 6, wherein the moulded propylene homopolymer product has been produced by a process according to claim 8 or 9.

8. Process for the preparation of a moulded propylene homopolymer product according to any one of the preceding claims 1 to 6 comprising the steps of

   (a) heating a propylene homopolymer powder to a temperature equal or above the melting temperature ($T_m$) measured by differential scanning calorimetry (DSC) of said powder, and holding the temperature for at least 1 minute,
   (c) cooling the compressed propylene homopolymer down to ambient temperature.

9. Process according to claim 8, wherein

   (a) in step (a) simultaneously pressure in the range of 1 to 140 MPa is applied; and
   (b) optionally between step (a) and (c) a step (b) takes place, wherein in step (b) the pressure of step (a) is held without further heating, the time applying the pressure in step (b) is preferably at least 1 min.

10. Process according to claim 8 or 9, wherein the temperature in step (a) is in the range of 165 to 240 °C.

11. Process according to claims 9 or 10, wherein in step (b) the pressure of step (a) without further heating is upheld for further 1 to 7 min.

**12.** Process according to any one of claims 8 to 10, wherein the propylene homopolymer polymer powder has been produced in the presence of catalyst system comprising

(i) a complex of formula (I)

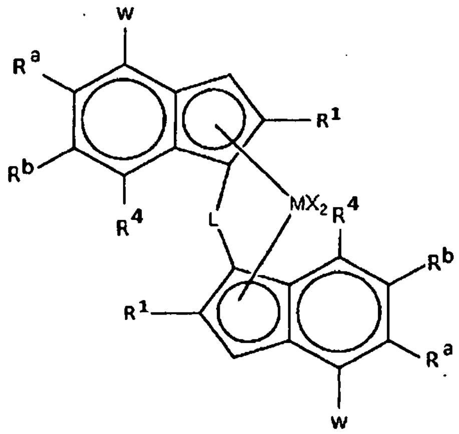

(I)

wherein

M is zirconium or hafnium;
each X is a sigma ligand;
L is a divalent bridge selected from -R'$_2$C-, -R'$_2$C-CR'$_2$-, -R'$_2$Si-, -R'$_2$Si-SiR'$_2$-, - R'$_2$Ge-, wherein each R' is independently a hydrogen atom, $C_1$-$C_{20}$-hydrocarbyl, tri($C_1$-$C_{20}$-alkyl)silyl, $C_6$-$C_{20}$-aryl, $C_7$-$C_{20}$-arylalkyl or $C_7$-$C_{20}$-alkylaryl;
each $R^1$ is independently a $C_1$-$C_{20}$ hydrocarbyl radical optionally containing one or more heteroatoms from groups 14-16, or is a $C_4$-$C_{20}$ hydrocarbyl radical branched at the β-atom to the cyclopentadienyl ring, optionally containing one or more heteroatoms belonging to groups 14-16, or is a $C_3$-$C_{20}$ hydrocarbyl radical branched at the β-atom to the cyclopentadienyl ring where the β-atom is an Si-atom;
each $R^a$ is independently hydrogen or an aliphatic $C_1$-$C_{20}$ hydrocarbyl group optionally containing one or more heteroatoms from groups 14-16;
each $R^b$ is independently hydrogen or an aliphatic $C_1$-$C_{20}$ hydrocarbyl group optionally containing one or more heteroatoms from groups 14-16; or
an $R^a$ and $R^b$ group on adjacent carbon atoms can be taken together to form a 5 membered saturated carbon ring which is optionally substituted by n groups $R^{18}$, n being from 0 to 3;
each $R^{18}$ is same or different and may be a $C_1$-$C_{20}$ hydrocarbyl group, or a $C_1$-$C_{20}$ hydrocarbyl radical optionally containing one or more heteroatoms belonging to groups 14-16;
each $R^4$ is independently an aliphatic $C_{1-20}$ hydrocarbyl group optionally containing one or more heteroatoms from groups 14-16 or is a hydrogen atom;
each W group is independently an aryl or heteroaryl group having up to 20 carbon atoms optionally substituted by one or more groups $R^5$
each $R^5$ is the same or different and is a $C_1$-$C_{20}$ hydrocarbyl group optionally containing one or more heteroatoms belonging to groups 14-16; or two $R^5$ groups on adjacent carbon atoms taken together can form a fused 5 or 6 membered non aromatic ring with the W group, said ring being itself optionally substituted with one or more $C_1$-$C_{20}$ hydrocarbyl group(s), or two adjacent $R^5$ groups taken together can form a further mono or multicyclic ring condensed to W optionally substituted by one or two groups $R^5$

and
(ii) optionally a cocatalyst comprising a compound of a group 13 metal.

**Patentansprüche**

**1.** Propylen-Homopolymer-Form-Produkt, umfassend mindestens 90 Gew.-% von einem Polypropylen-Homopolymer

mit

(a) einer Pentaden-Isotaktizität (mmmm) von gleich oder mehr als 98,0 Mol-%, wie durch $^{13}C$ NMR-Spektroskopie bestimmt,
(b) einer Schmelz-Temperatur ($T_m$), gemessen durch dynamische Differenz-Kalorimetrie (DSC), von mindestens 140,0°C, und
(c) einem beta-Phasen-Gehalt im Bereich von 10 bis 90 %, wobei die ß-Phase über Weitwinkel-Röntgenstreuung (WAXS) gemessen wird,

wobei das Propylen-Homopolymer-Form-Produkt und/oder das Propylen-Homopolymer frei von einem beta-Keimbildungsmittel sind/ist.

**2.** Propylen-Homopolymer-Form-Produkt nach Anspruch 1, wobei das Propylen-Homopolymer-Form-Produkt und/oder Propylen-Homopolymer aufweist/aufweisen

(a) einen Gehalt von mrrm-Stereo-Defekt von unter 1,0 Mol-%,
und/oder
(b) <2,1> Erythro-Regio-Defekte von gleich oder mehr als 0,1 bis gleich oder unter 1,2 Mol-%, vorzugsweise von gleich oder mehr als 0,10 bis gleich oder unter 0,80 Mol-%.

**3.** Propylen-Homopolymer-Form-Produkt nach einem der Ansprüche 1 bis 2, wobei das Propylen-Homopolymer-Form-Produkt und/oder Propylen-Homopolymer aufweist/aufweisen

(a) eine Schmelze-Fließ-Rate $MFR_2$ (230°C), gemessen gemäß ISO 1133, von nicht mehr als 10,0 g/10 min, und/oder
(b) eine Schmelz-Temperatur ($T_m$), gemessen durch dynamische Differenz-Kalorimetrie (DSC), von 147 bis 175°C.

**4.** Propylen-Homopolymer-Form-Produkt nach einem der Ansprüche 1 bis 3, wobei das Propylen-Homopolymer-Form-Produkt und/oder Propylen-Homopolymer eine in kaltem Xylol lösliche Fraktion (XCS), bestimmt bei 25°C gemäß ISO 16152, von gleich oder unter 1,5 Gew.-% aufweist/aufweisen.

**5.** Propylen-Homopolymer-Form-Produkt nach einem der Ansprüche 1 bis 4, wobei das Propylen-Homopolymer-Form-Produkt Druck-geformt ist.

**6.** Propylen-Homopolymer-Form-Produkt nach einem der Ansprüche 1 bis 5, ausschließlich einer Produkt-Größe von 30 x 5 x 0,6 mm.

**7.** Propylen-Homopolymer-Form-Produkt nach einem der Ansprüche 1 bis 6, wobei das Propylen-Homopolymer-Form-Produkt durch ein Verfahren nach Anspruch 8 oder 9 hergestellt wurde.

**8.** Verfahren zur Herstellung von einem Propylen-Homopolymer-Form-Produkt nach einem der vorangehenden Ansprüche 1 bis 6, umfassend die Schritte von

(a) Erwärmen eines Propylen-Homopolymer-Pulvers auf eine Temperatur gleich oder oberhalb der Schmelz-Temperatur ($T_m$), gemessen durch dynamische Differenz-Kalorimetrie (DSC) des Pulvers, und Halten der Temperatur für mindestens 1 Minute,
(c) Kühlen des verdichteten Propylen-Homopolymers herunter auf Umgebungs-Temperatur.

**9.** Verfahren nach Anspruch 8, wobei

(a) in Schritt (a) gleichzeitig Druck in dem Bereich von 1 bis 140 MPa beaufschlagt wird;
und
(b) gegebenenfalls zwischen Schritt (a) und (c) ein Schritt (b) stattfindet, wobei in Schritt (b) der Druck von Schritt (a) ohne weiteres Erhitzen gehalten wird, wobei die Zeit zum Beaufschlagen des Drucks in Schritt (b) vorzugsweise mindestens 1 min ist.

**10.** Verfahren nach Anspruch 8 oder 9, wobei die Temperatur in Schritt (a) in dem Bereich von 165 bis 240°C liegt.

**11.** Verfahren nach Ansprüchen 9 oder 10, wobei in Schritt (b) der Druck von Schritt (a) ohne weiteres Erhitzen für weitere 1 bis 7 min aufrecht erhalten wird.

**12.** Verfahren nach einem der Ansprüche 8 bis 10, wobei das Propylen-Homopolymer-Polymer-Pulver in Gegenwart eines Katalysator-Systems hergestellt wurde, umfassend

(i) einen Komplex von Formel (I)

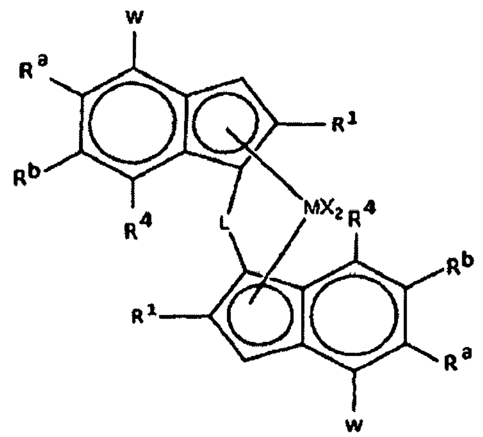

(I)

worin

M Zirkonium oder Hafnium darstellt;
jedes X einen Sigma-Liganden darstellt;
L eine zweiwertige Brücke darstellt, ausgewählt aus $-R'_2C-$, $-R'_2C-CR'_2-$, $-R'_2Si-$, $-R'_2Si-SiR'_2-$, $-R'_2Ge-$, wobei jedes R' unabhängig ein Wasserstoff-Atom, $C_1$-$C_{20}$-Kohlenwasserstoff, Tri ($C_1$-$C_{20}$-alkyl) silyl, $C_6$-$C_{20}$-Aryl, $C_7$-$C_{20}$-Arylalkyl oder $C_7$-$C_{20}$-Alkylaryl darstellt;
jedes $R^1$ unabhängig einen $C_1$-$C_{20}$-Kohlenwasserstoff-Rest, gegebenenfalls enthaltend ein oder mehrere Heteroatome aus Gruppen 14-16, darstellt, oder einen $C_4$-$C_{20}$-Kohlenwasserstoff-Rest, verzweigt an dem ß-Atom zu dem Cyclopentadienyl-Ring, gegebenenfalls enthaltend ein oder mehrere Heteroatome, die zu Gruppen 14-16 gehören, darstellt oder einen $C_3$-$C_{20}$-Kohlenwasserstoff-Rest, verzweigt an dem ß-Atom zu dem Cyclopentadienyl-Ring, darstellt, wobei das $\beta$-Atom ein Si-Atom ist;
jedes $R^a$ unabhängig Wasserstoff oder eine aliphatische $C_1$-$C_{20}$-Kohlenwasserstoff-Gruppe, gegebenenfalls enthaltend ein oder mehrere Heteroatome aus Gruppen 14-16, darstellt;
jedes $R^b$ unabhängig Wasserstoff oder eine aliphatische $C_1$-$C_{20}$-Kohlenwasserstoff-Gruppe, gegebenenfalls enthaltend ein oder mehrere Heteroatome aus Gruppen 14-16, darstellt; oder
eine Gruppe $R^a$ und $R^b$ an benachbarten Kohlenstoff-Atomen zusammen genommen werden können, um einen 5-gliedrigen gesättigten Kohlenstoff-Ring zu bilden, der gegebenenfalls mit n Gruppen $R^{18}$ substituiert ist, wobei n 0 bis 3 ist;
jedes $R^{18}$ gleich oder verschieden ist und eine $C_1$-$C_{20}$-Kohlenwasserstoff-Gruppe oder einen $C_1$-$C_{20}$- Kohlenwasserstoff-Rest, gegebenenfalls enthaltend ein oder mehrere Heteroatome, die zu Gruppen 14-16 gehören, darstellt;
jedes $R^4$ unabhängig eine aliphatische $C_1$-$C_{20}$-Kohlenwasserstoff-Gruppe, gegebenenfalls enthaltend ein oder mehrere Heteroatome aus Gruppen 14-16, darstellt oder ein Wasserstoff-Atom darstellt;
jede Gruppe W unabhängig eine Aryl- oder Heteroaryl-Gruppe mit bis zu 20 Kohlenstoff-Atomen, gegebenenfalls substituiert mit einer oder mehreren Gruppen $R^5$, darstellt;
jedes $R^5$ gleich oder verschieden ist und eine $C_1$-$C_{20}$-Kohlenwasserstoff-Gruppe, gegebenenfalls enthaltend ein oder mehrere Heteroatome, die zu Gruppen 14-16 gehören, darstellt; oder zwei Gruppen $R^5$ an benachbarten Kohlenstoff-Atomen zusammen genommen werden können, um einen kondensierten 5- oder 6-gliedrigen nicht-aromatischen Ring mit der Gruppe W zu bilden, wobei der Ring selbst gegebenenfalls mit einer oder mehreren $C_1$-$C_{20}$-Kohlenwasserstoff-Gruppe(n) substituiert ist, oder zwei benachbarte Gruppen $R^5$ zusammen genommen einen weiteren mono- oder multicyclischen Ring, kondensiert an W, gegebenenfalls substituiert mit einer oder zwei Gruppen $R^5$, bilden können;

und
(ii) gegebenenfalls einen Cokatalysator, umfassend eine Verbindung von einem Metall der Gruppe 13.

## Revendications

**1.** Produit moulé en homopolymère de propylène, comprenant au moins 90 % en poids d'un homopolymère de polypropylène présentant

(a) une isotacticité de pentade (mmmm), telle que déterminée par spectroscopie RMN-$^{13}C$, égale ou supérieure à 98,0 % en moles,
(b) un point de fusion ($T_m$), mesuré par calorimétrie à balayage différentiel (DSC), d'au moins 140,0°C, et
(c) une teneur en phase bêta située dans la plage allant de 10 à 90 %, ladite phase β étant mesurée via diffusion des rayons X aux grands angles (WAXS), et

dans lequel ledit produit moulé en homopolymère de propylène et/ou ledit homopolymère de propylène est/sont exempt(s) d'agent de bêta-nucléation.

**2.** Produit moulé en homopolymère de propylène selon la revendication 1, dans lequel le produit moulé en homopolymère de propylène et/ou l'homopolymère de propylène présente(nt)

(a) une teneur en stéréo-défauts mrrm inférieure à 1,0 % en moles,
et/ou
(b) une teneur en régio-défauts érythro <2,1> de 0,1 ou plus à 1,2 % en moles ou moins, de préférence de 0,10 ou plus à 0,80 % en moles ou moins.

**3.** Produit moulé en homopolymère de propylène selon l'une quelconque des revendications 1 et 2, dans lequel le produit moulé en homopolymère de propylène et/ou l'homopolymère de propylène présente(nt)

(a) un indice de fluage $MFR_2$ (230°C), mesuré conformément à la norme ISO 1133, ne dépassant pas 10,0 g/10 min,
et/ou
(b) un point de fusion ($T_m$), mesuré par calorimétrie à balayage différentiel (DSC), de 147 à 175°C.

**4.** Produit moulé en homopolymère de propylène selon l'une quelconque des revendications 1 à 3, dans lequel le produit moulé en homopolymère de propylène et/ou l'homopolymère de propylène présente(nt) une fraction soluble dans le xylène froid (XCS), déterminée à 25°C conformément à la norme ISO 16152, égale ou inférieure à 1,5 % en poids.

**5.** Produit moulé en homopolymère de propylène selon l'une quelconque des revendications 1 à 4, lequel produit moulé en homopolymère de propylène est moulé par compression.

**6.** Produit moulé en homopolymère de propylène selon l'une quelconque des revendications 1 à 5, excluant une taille de produit de 30 x 5 x 0,6 mm.

**7.** Produit moulé en homopolymère de propylène selon l'une quelconque des revendications 1 à 6, lequel produit moulé en homopolymère de propylène a été produit par un procédé selon la revendication 8 ou 9.

**8.** Procédé pour la préparation d'un produit moulé en homopolymère de propylène selon l'une quelconque des revendications 1 à 6, comprenant les étapes de

(a) chauffage d'une poudre d'homopolymère de propylène à une température égale ou supérieure au point de fusion ($T_m$), mesuré par calorimétrie à balayage différentiel (DSC), de ladite poudre, et maintien de la température pendant au moins 1 minute,
(c) retour à la température ambiante de l'homopolymère de polypropylène compressé.

**9.** Procédé selon la revendication 8, dans lequel

(a) dans l'étape (a), simultanément une pression située dans la plage allant de 1 à 140 MPa est appliquée ; et
(b) éventuellement entre l'étape (a) et l'étape (c) a lieu une étape (b), dans laquelle la pression de l'étape (a) est maintenue sans chauffage supplémentaire, et le temps d'application de la pression dans l'étape (b) est de préférence d'au moins 1 minute.

**10.** Procédé selon la revendication 8 ou 9, dans lequel la température dans l'étape (a) est située dans la plage allant de 165 à 240°C.

**11.** Procédé selon la revendication 9 ou 10, dans lequel, dans l'étape (b), la pression de l'étape (a) sans chauffage supplémentaire est maintenue pendant encore 1 à 7 minutes.

**12.** Procédé selon l'une quelconque des revendications 8 à 10, dans lequel la poudre de polymère d'homopolymère de propylène a été produite en présence d'un système catalyseur comprenant

(i) un complexe de formule (I)

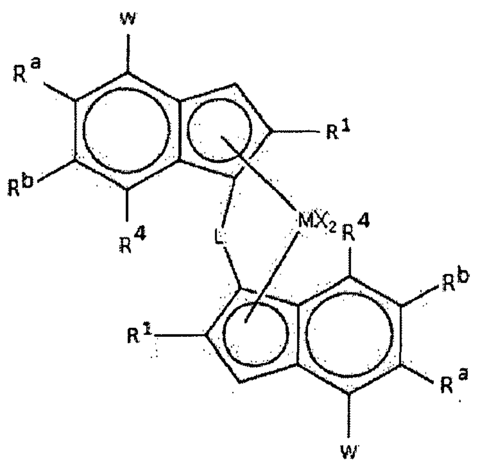

(I)

dans laquelle

M est le zirconium ou le hafnium ;
chaque X est un ligand sigma ;
L est un pont divalent choisi parmi $-R'_2C-$, $-R'_2C-CR'_2-$, $-R'_2Si-$, $-R'_2Si-SiR'_2-$, $-R'_2Ge-$, où chaque R' est indépendamment un atome d'hydrogène, un radical hydrocarbyle en $C_1$ à $C_{20}$, tri (alkyle en $C_1$ à $C_{20}$) silyle, aryle en $C_6$ à $C_{20}$, arylalkyle en $C_7$ à $C_{20}$ ou alkylaryle en $C_7$ à $C_{20}$ ;
chaque $R^1$ est indépendamment un radical hydrocarbyle en $C_1$ à $C_{20}$ contenant éventuellement un ou plusieurs hétéroatome(s) des Groupes 14 à 16, ou est un radical hydrocarbyle en $C_4$ à $C_{20}$ ramifié au niveau de l'atome β vers le cycle cyclopentadiényle, contenant éventuellement un ou plusieurs hétéroatome(s) appartenant aux Groupes 14-16, ou est un radical hydrocarbyle en $C_3$ à $C_{20}$ ramifié au niveau de l'atome β vers le cycle cyclopentadiényle où l'atome β est un atome Si ;
chaque $R^a$ est indépendamment l'hydrogène ou un groupe hydrocarbyle aliphatique en $C_1$ à $C_{20}$ contenant éventuellement un ou plusieurs hétéroatome(s) appartenant aux Groupes 14-16 ;
chaque $R^b$ est indépendamment l'hydrogène ou un groupe hydrocarbyle aliphatique en $C_1$ à $C_{20}$ contenant éventuellement un ou plusieurs hétéroatome(s) appartenant aux Groupes 14-16 ; ou
un groupe $R^a$ et un groupe $R^b$ sur des atomes de carbone adjacents peuvent être pris ensemble pour former un cycle carboné saturé à 5 chaînons qui est éventuellement substitué par n groupes $R^{18}$, n valant de 0 à 3 ;
chaque $R^{18}$ est identique ou différent et peut être un groupe hydrocarbyle en $C_1$ à $C_{20}$, ou un radical hydrocarbyle en $C_1$ à $C_{20}$ contenant éventuellement un ou plusieurs hétéroatome(s) appartenant aux Groupes 14-16 ;
chaque $R^4$ est indépendamment un groupe hydrocarbyle aliphatique en $C_1$ à $C_{20}$ contenant éventuellement un ou plusieurs hétéroatome(s) des Groupes 14-16, ou est un atome d'hydrogène ;
chaque groupe W est indépendamment un groupe aryle ou hétéroaryle ayant jusqu'à 20 atomes de carbone,

éventuellement substitué par un ou plusieurs groupe(s) $R^5$ ;
chaque $R^5$ est identique ou différent et est un groupe hydrocarbyle en $C_1$ à $C_{20}$ contenant éventuellement un ou plusieurs hétéroatome(s) appartenant aux Groupes 14-16 ; ou bien deux groupes $R^5$ sur des atomes de carbone adjacents, pris ensemble, peuvent former un cycle non aromatique à 5 ou 6 chaînons condensé avec le groupe W, ledit cycle étant lui-même éventuellement substitué par un ou plusieurs groupe (s) hydrocarbyle en $C_1$ à $C_{20}$, ou bien deux groupes $R^5$ adjacents, pris ensemble, peuvent former un autre cycle mono- ou poly-cyclique condensé à W éventuellement substitué par un ou deux groupes $R^5$ ;

et
(ii) éventuellement un cocatalyseur comprenant un composé d'un métal du Groupe 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 201057841 A
- WO 03051934 A
- WO 2006069733 A
- WO 2007116034 A
- WO 2011135005 A
- WO 2003051934 A


### Non-patent literature cited in the description


- **BUSSE et al.** *J. Macromolecules,* 2000, vol. 33, 8775-8780
- **KRACHE et al.** *Macromolecues,* 2007, vol. 40, 6871-6878
- **NELLO PASQUINI.** Polypropylene Handbook. Hanser
- **A. ENDERS ; G. MAAS.** *Chemie in unserer Zeit,* 2000, vol. 34 (6
- **PIERANDREA LO NOSTRO.** Advances in Colloid and Interface Science. Elsevier Science, 1995, vol. 56, 245-287
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **BUSICO, V. ; CIPULLO, R. ; MONACO, G. ; VACATELLO, M. ; SEGRE, A.L.** *Macromoleucles,* 1997, vol. 30, 6251
- **RESCONI, L. ; CAVALLO, L. ; FAIT, A. ; PIEMONTESI, F.** *Chem. Rev.,* 2000, vol. 100, 1253
- **CHALLA G ; HERMANS PH ; WEIDINGER A.** *Makromol. Chem.,* 1962, vol. 56, 169
- **TURNER-JONES A ; AIZLEWOOD JM ; BECKETT DR.** *Makromol. Chem.,* 1974, vol. 75, 134
- **PAE KD.** *J. Polym. Sci.,* 1968, vol. 6, 657
- **OBADAL M ; CERMAK R ; STOKLASA K.** *Macromol. Rapid Commun.,* 2005, vol. 26, 1253
- **RIEGER ; SCHÖBEL.** *Chemistry-A European Journal,* 02 April 2012, vol. 18 (14), 4174-4178
- *Chemistry-A European Journal,* 02 April 2012, vol. 18 (14), 4174-4178